# EUROPEAN PATENT SPECIFICATION

(11) **EP 1 665 120 B1**
(45) Date of publication and mention of the grant of the patent: **17.04.2013**
(21) Application number: 04780679.9
(22) Date of filing: 09.08.2004
(51) Int. Cl.: G06K 19/07, G06K 7/00

(54) **METHODS AND APPARATUSES TO IDENTIFY DEVICES**
VERFAHREN UND VORRICHTUNGEN ZUM IDENTIFIZIEREN VON EINRICHTUNGEN
PROCEDES ET APPAREILS PERMETTANT D'IDENTIFIER DES DISPOSITIFS

(30) Priority: 09.08.2003 US 494143 P; 07.11.2003 US 518229 P
(43) Date of publication of application: 07.06.2006
(73) Proprietor: Alien Technology Corporation, Morgan Hill, CA 95037 (US)
(72) Inventor: SMITH, John, Stephen, San Jose, CA 95125 (US)
(74) Representative: WP Thompson
(86) International application number: PCT/US2004/025883
(87) International publication number: WO 2005/015480

(56) References cited:
- WO-A2-03/032240

## Description

### FIELD OF THE INVENTION

The present invention relates to the field of devices having an identifier, such as tags, and further relates to methods and apparatuses for identifying such tags.

### BACKGROUND INFORMATION

It is desirable to interrogate multiple wireless tags by sending from an interrogating transmitter a code and having information transmitted by the tag in response. This is commonly accomplished by having the tag listen for an interrogation message and for it to respond with a unique serial number and/or other information.

Since only one tag can be read at a time, some prior art devices and apparatuses have improved this interrogation and response process by utilizing a ready-quiet protocol. In the case of a ready-quiet protocol, the tags, once placed in the quiet state, must either timeout or be touched by a talk command before they can participate in an inventory. Several talk commands can be issued before an inventory, but there is no guarantee that multipath will be favourable, the frequency right, or even that a specific tag is physically close enough to the reader at that point in time. Any tags that miss the command or commands to wake up at the beginning of the inventory process will be missed, which is undesirable.

The use of a time-out for a persistent quiet is a conceptually simple alternative, but the manufacture of a tag that has a tightly controlled persistence time is difficult. Also, for example, 10 seconds might be too short a time to inventory a large number of tags, and yet 10 seconds might be long enough to interfere with multiple readers tracking an item on a trajectory or catching a shoplifter in the act of destroying a tag or putting the item into a shielded bag and walking away with an item.

International Application Publication No. WO 03/032240 ("D1") entitled "Methods and Apparatuses for Identification" discloses an identification system to identify tags. The identification system includes a reader and one or more tags. The system divides a number space into n bins, wherein each bin is associated with m unique bits of the number space, and the number space contains the identification codes of the tags. A command is issued to test v bits of the number space. A response is received from a tag, wherein the response occurs when a first portion of an identification code of the tag matches the v bits of the number space, a timing of the response corresponds to a particular bin and m unique bits associated with the particular bin corresponds to a second portion of the identification code.

The present invention provides a method for identifying tags, the method being characterized by:
issuing a first set of commands to identify a first plurality of tags in a first state, wherein, as a result of identifying the first plurality of tags in the first state, the first plurality of tags which are identified in the first state are placed in a second state; and
issuing a second set of commands, to identify a second plurality of tags in the second state, wherein, as a result of identifying the second plurality of tags in the second state, the second plurality of tags which are identified in the second state are placed in the first state, wherein the first state and the second state are symmetrical states, and wherein the tags in the first state do not respond to the second set of commands, and the tags in the second state do not respond to the first set of commands.

The symmetric version effectively has less state dependence by symmetrizing the quite-ready states into two symmetrical halves, the State A and State B of the protocol.

The present invention also provides an apparatus for identifying tags, the apparatus being characterized by:
means for issuing a first set of commands to identify a first plurality of tags in a first state and to place the first plurality of tags, which are identified in the first state, in a second state; and
means for issuing a second set of commands to identify a second plurality of tags in the second state and to place the second plurality of tags, which are identified in the second state, in the first state, wherein at least one of the first set of commands contains a first parameter indicating the first state that causes the first plurality of tags to perform an operation that is identical to the operation performed by the second plurality of tags in response to at least one of the second set of commands that contains a second parameter indicating the second state wherein the first state and the second state are not the same states, and wherein the first set of commands is different from the second set of commands in that the tags in the first state do not respond to the second set of commands, and the tags in the second state do not respond to the first set of commands.

The symmetry described herein will substantially increase the performance over ready-quiet protocols in cases where tags have been inventoried and put into the quiet state, and it is desired to inventory them again, either from a different reader station, or as part of a continuous inventory to monitor tags being removed, on a timely basis.

One implementation of the tag is to supply a persistent node that maintains its state for at least twenty seconds even in the absence of power. Assuming that the persistent node decays to the zero (0) state, [0] would encode State A, and [1] will encode State B. State B expires with time into the State A. There is no upper bound on the time that State B persists, and it is not permitted to be in states where it is randomly powering up into State A or State B. The suggested implementation is to write the persistent node with 0 upon reading a 0. An alternative preferred implementation is to have two separate persistent nodes for State A and State B, always clearing one when setting the other. In this case, when both nodes have expired, the tag should respond to all commands of either the A or B type.
The invention further provides a tag comprising:
means for receiving at the tag while in a first state, a first set of commands to identify the tag in the first state, wherein, as a result of being identified, the tag in the first state is placed in a second state,
means for receiving at the tag while in the second state, a second set of commands to identify the tag in the second state, wherein, as a result of being identified, the tag in the second state is placed in the first state, wherein at least one of the first set of commands, containing a first parameter associated with the first state, causes the tag in the first state to perform an operation that is identical to the operation performed by the tag in the second state in response to at least one of the second set of commands containing a second parameter associated with the second state, wherein the first state and the second state are not the same and wherein the tag does not respond to the second set of commands while in the first state and does not respond to the first set of commands while in the second state.

The tag may be an RFID tag and may be a unique tag or a non-unique tag. In one exemplary embodiment, both states may be persistent states. In an alternative embodiment, one state may be a persistent state and the other state may be a transient state. Initially, in this one exemplary embodiment, all items are in an unknown state. The system of this exemplary embodiment consists of a reader, which transmits RF signals, and RFID tags which may be powered by the RF energy. The reader uses a series of coded interrogation signals to search a population of tags. The search may be a random search or a binary tree search that systematically classifies and separates groups and sub-groups that match more and more specific search criteria.

In one example of a tree approach, at each search level, tags that match the interrogation signal sort themselves into temporal bins corresponding to a subset of their binary coded ID's. The reader has the ability to detect if there is more than one tag in a temporal bin, indicating that additional sorting is required. Eventually, each bin contains either no members, or one member. The identity of the member of a populated bin can then be read. All items so identified are then placed in the other state where they will not respond to interrogation signals coded to evoke responses from items in the persistent state. Once this process has been run to completion, the roles of the states are reversed, and the inventory is run again. This technique allows the identification of items that might have been missed in the first identification round because they were in the wrong initial state, or missed one or more commands due to weak signals, multipath interference, or distance.

One aspect of the invention involves a command structure that has at least a two-state symmetry. This involves, in one embodiment, a QuietA command and a QuietB command. According to this aspect, an exemplary embodiment of a method for identifying tags includes: issuing from a reader a first set of commands of a first type (e.g., the PingIDA, ScrollIDA, and QuietA commands of the protocol, described below) to identify tags in a first group of tags which are in a first state (e.g. State A), wherein a first command (e.g. QuietA) in the first set of commands of the first type causes addressed tags to be placed in a second group of tags which are in a second state (e.g. State B) which are addressable by a second set of commands of a second type (e.g. PingIDB, ScrollIDB, and QuietB which are described below), wherein the first group of tags (in the first state) do not respond to the second set of commands of the second type (e.g. tags in State A do not respond to PingIDB, ScrollIDB, and QuietB); and wherein the method also includes issuing from a reader the second set of commands of the second type (e.g., the PingIDB, ScrollIDB, and QuietB commands of the protocol, described below) to identify tags in the second group of tags in the second state wherein a second command (e.g. Quiet B) in the second set of commands of the second type causes addressed tags to be placed in the first group of tags (in the first state) which respond to the first set of commands of the first type and wherein the second group of tags (in the second state) do not respond to the first set of commands of the first type.

### BRIEF DESCRIPTION OF THE DRAWINGS

The present invention is illustrated by way of example and not limitation in the figures of the accompanying drawings in which like references indicate similar elements.

Figure 1 illustrates one embodiment of an identification system that includes a reader and a plurality of RF tags.

Figure 2 illustrates one embodiment of an RF tag.

Figure 3 illustrates another embodiment of an RF tag.

Figure 4 illustrates one embodiment of a reader-to-tag modulation scheme.

Figure 5 illustrates a further embodiment of a reader-to-tag modulation scheme.

Figure 6 illustrates one embodiment of reader-to-tag data encoding.

Figure 7A illustrates one embodiment of tag-to-reader data encoding.

Figure 7B illustrates another embodiment of tag-to-reader data encoding.

Figure 8 illustrates a state diagram for one embodiment of a two-state tag protocol.

Figure 9 illustrates a state diagram for one embodiment of a three-state tag protocol.

Figure 10 illustrates an example of a tag response.

Figure 11 illustrates one embodiment of a binary search according to the present invention.

Figure 12A illustrates an example of a multi-level binary search

Figure 12B illustrates an example of tag backscatter in response to a binary search.

Figure 12C illustrates another example of tag backscatter in response to a binary search.

Figure 13 illustrates one embodiment of collision detection.

Figure 14A illustrates one embodiment of a method to identify devices.

Figure 14B illustrates another embodiment of a method to identify devices.

### DETAILED DESCRIPTION

The subject invention will be described with reference to numerous details set forth below, and the accompanying drawings will illustrate the invention. The following description and drawings are illustrative of the invention and are not to be construed as limiting the invention. Numerous specific details are described to provide a thorough understanding of the present invention. However, in certain instances, well-known or conventional details are not described in order to not unnecessarily obscure the present invention in detail.

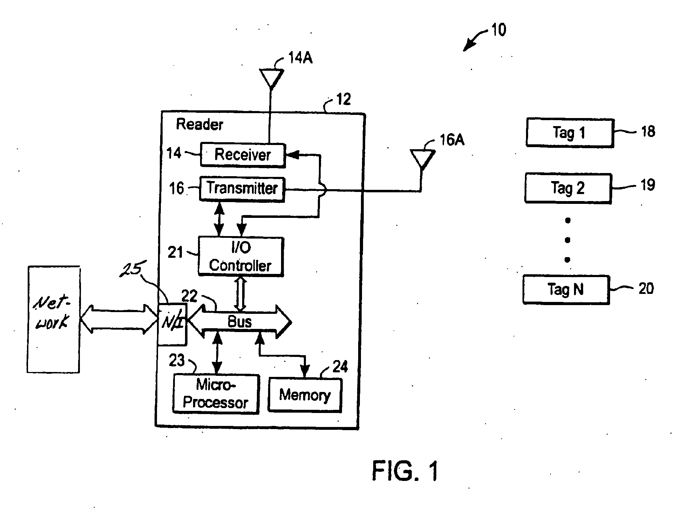

Figure 1 illustrates an example of an identification system 10, which includes a reader 12 and a plurality of tags 18, 19, and 20. The system is typically a reader-talks-first RF ID system using either passive or semi-passive active backscatter transponders as tags. The incorporation of a battery and/or memory into a tag is an expanded feature to facilitate longer read range; however, the use of the battery does require certain trade-offs, such as higher costs, limited longevity, larger form factor, greater weight, and end-of-life disposal requirements. Thus the tags 18,19, and 20 may have memory and/or a battery or may have neither of these elements. It will be appreciated that different types of tags may be mixed in a system where a reader is interrogating tags with batteries and tags without batteries.

There are at least 4 classes of tags which may be used with the present invention: (1) no power source on the tag except for power which is obtained from the tag's antenna, but the tag does include a read-only memory which has the tag's identification code; (2) a tag without internal power, but when powered from the reader, can write data to non-volatile memory in the tag; this type of tag also includes memory for storing the identification code; (3) a tag with a small battery to provide power to the circuitry in the tag. Such a tag may also include non-volatile memory as well as memory for storing the tag's identification code; (4) a tag which can communicate with other tags or other devices.

Figure 1 shows one embodiment of a reader. The reader 12 will typically include a receiver 14 and a transmitter 16, each of which is coupled to an I/O (input/output) controller 21. The receiver 14 may have its own antenna 14A, and the transmitter 16 may have its own antenna 16A. It will be appreciated by those in the art that the transmitter 16 and the receiver 14 may share the same antenna provided that there is a receive/transmit switch which controls the signal present on the antenna and which isolates the receiver and transmitter from each other. The receiver 14 and the transmitter 16 may be similar to conventional receiver and transmitter units found in current readers. The receiver and transmitter may typically operate, in North America, in either the frequency range of about 900 megahertz band or the 2400 megahertz band. It will be appreciated, however, that the operation of the RFID system disclosed herein is not dependent upon the specific operating frequency. The receiver and transmitter are coupled to the I/O controller 21 that controls the receipt of data from the receiver and the transmission of data, such as commands, from the transmitter. The I/O controller is coupled to a bus 22, which is in turn coupled to a microprocessor 23 and a memory 24. There are various different possible implementations that may be used in the reader 12 for the processing system represented by elements 21, 22, 23, and 24.

In one implementation, the microprocessor 23 is a programmable microcontroller, such as an 8051 microcontroller or other well-known microcontrollers or microprocessors (e.g. a powerPC microprocessor), and the memory 24 includes dynamic random access memory and a memory controller which controls the operation of the memory; memory 24 may also include a non-volatile read only memory for storing data and software programs. The memory 24 typically contains a program that controls the operation of the microprocessor 23 and also contains data used during the processing of tags as in the interrogation of tags. In one embodiment further described below, the memory 24 would typically include a computer program which causes the microprocessor 23 to send search commands through the I/O controller 21 to the transmitter and to receive responses from the tags through the receiver 14 and through the I/O controller 21.

The memory 24 would further include a data structure such as a binary tree, e.g. a binary tree shown in the above noted patent applications, which tree is created as a result of the particular search algorithm which is further described below or in these applications. The reader 12 may also include a network interface 25, such as an Ethernet interface, which allows the reader to communicate to other processing systems through a network 26. The network interface would typically be coupled to the bus 22 so that it can receive data, such as the list of tags identified in an interrogation from either the microprocessor 23 or from the memory 24.

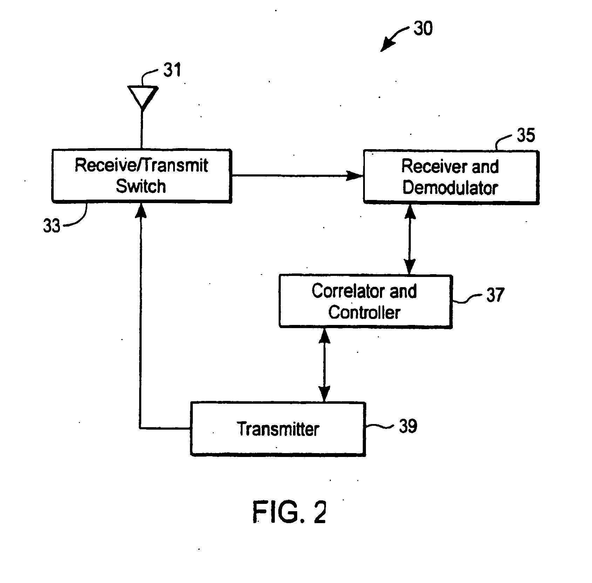

Figure 2 shows one embodiment of a tag that may be used with the present invention. The tag 30 includes an antenna 31, which is coupled to a receive/transmit switch 33. This switch is coupled to the receiver and demodulator 35 and to the transmitter 39. A correlator and controller unit 37 is coupled to the receiver and demodulator 35 and to the transmitter 39. The particular example of a tag shown in Figure 2 may be used in various embodiments in which a memory for maintaining data between commands is maintained in the tag and in which a bit by bit (or a larger data chunk) correlation occurs in the tag. The receiver and demodulator 35 receives signals through the antenna 31 and the switch 33 and demodulates the signals and provides these signals to the correlator and controller unit 37. Commands received by the receiver 35 are passed to the controller of the unit 37 in order to control the operation of the tag. Data received by the receiver 35 is also passed to the control unit 37, and this data may be correlated with the tag's identification code in the embodiments described below and in the above noted applications. The transmitter 39, under control of the control unit 37, transmits responses or other data through the switch 33 and the antenna 31 to the reader. It will be appreciated by those in the art that the receiver/demodulator 35 and the transmitter 39 may have separate antennas such that receive/transmit switch 33 may not be required.

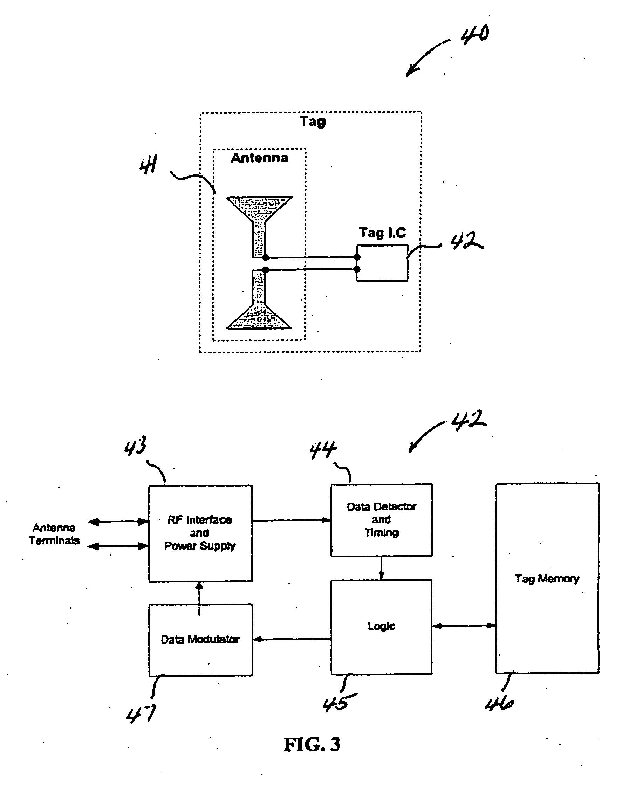

Figure 3 shows an alternative embodiment of a tag that may be used with the present invention. Tag 40 may consist of an antenna 41, which may be a printed antenna or other low cost antenna, and an integrated circuit (IC) 42, connected together. The IC implements a command protocol and contains the tag's identity code, which may be an electronic product code (EPC™) conforming to a tag data standard such as the TAG Data Standard promulgated by the Tag Data Standard Working Group of EPCGlobal. The antenna receives interrogation signals from reader 12 and reflects the interrogation signal back to the reader in response to a modulation signal created by the IC. The tag IC may comprise an RF interface and power supply 43, a data detector and timing block 44, control logic 45, tag memory 46 and a data modulator 47. In one embodiment, the RF interface and power supply 43 converts RF energy from the reader into DC power required for the IC 42 to operate, and provides modulation information to the data detector and timing block 44. Alternatively, power may be supplied by an integral battery. The data detector and timing block 44 de-modulates the reader signals and generates timing and data signals used by the control logic 45. The RF interface 43 also provides a means of coupling the tag modulation signals to the antenna 41 for transmission to the reader. The control logic 45 provides the command and control functions that coordinate all of the functions of the IC 42. The control logic 42 interprets data from the reader, performs the required internal operations and determines if a tag will respond to the reader. The control logic 42 implements the state diagram and communications protocol described below. The tag memory 46contains the EPC™ code of the item tagged by the RF tag. The tag memory 46 may contain a unique identification code or a non-unique identification code. The tag memory may also contain a checksum that may be used for error detection. The data modulator translates the binary tag data into a signal that is applied to the RF interface 43 and then transmitted to the reader via the antenna 41.

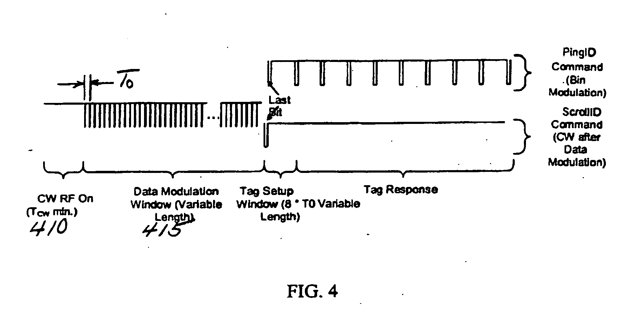

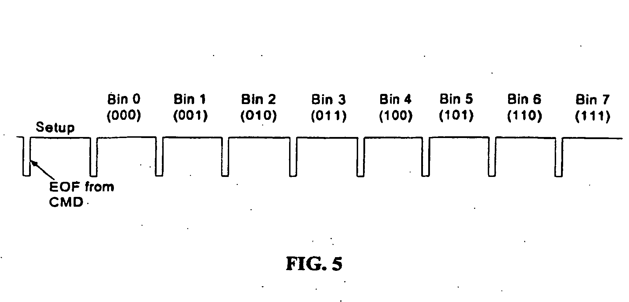

Readers communicate with a field of tags using one of at least two types of modulation: Data Modulation and Bin Modulation. Data Modulation is used to transmit data from the reader to the tags. Bin Modulation is used during the tag reply interval, following a PingID command, for example, as part of an anti-collision algorithm that sorts tag responses into time slots. Figure 4 illustrates one embodiment of reader-to-tag modulation. Each command is preceded by a period of unmodulated, or continous wave (CW) signaling 410 to power up the tags and allow the tags to detect the beginning of the command. During the Data Modulation of a command 415, the reader provides a master clock signal to tags in their neighborhood. The time between clock ticks, To, determines the reader-to-tag data rate. The tags may be synchronized to the active reader on the negative or positive edges of the RF data modulation envelope. Subsequent signaling may be tied to this fundamental frequency in a proportional manner. In one embodiment of Bin Modulation, as shown in figure 5, ten pulses may be sent by the reader to define nine time intervals. The first interval, after the end of the preceding command (EOF), is used by the tags to set up for modulation. The remaining eight intervals, shown as Bin numbers 0 thru 7 in figure 5, are used to define response intervals for the tags.

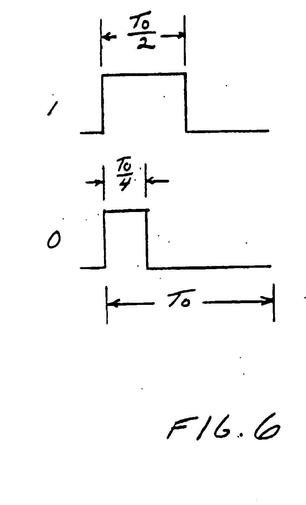

In one embodiment of reader-to-tag data modulation, as illustrated in figure 6, binary data from the reader may be encoded as pulse width modulation. In this exemplary embodiment, logical zeros may be defined as a modulation whose width is one fourth (1/4) of the master clock interval, To. Logical ones may be encoded as a modulation whose width is one half (1/2) of the master clock interval, To.

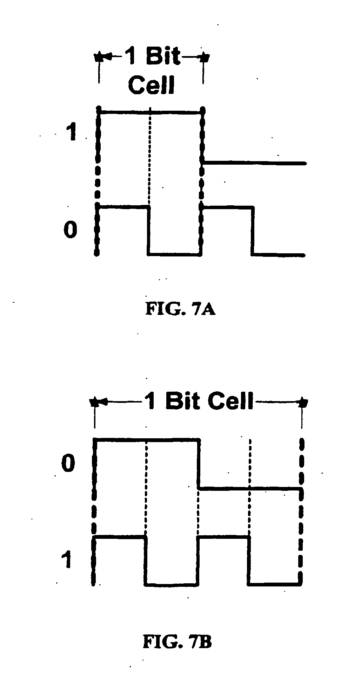

Tags reply to reader commands with backscatter modulation. In one embodiment of tag-to-reader modulation, as shown in figure 7A, binary data from a tag is encoded in a two-interval bit cell where a logical 1 is encoded as a high state during both intervals and a logical zero is encoded as a high state during the first interval and a low state during the second interval. In an alternative embodiment, as shown in figure 7B, data may be encoded in a four-interval bit cell. While requiring more time to encode data, this later modulation scheme allows a reader to detect tag contentions between tags, when more than one tag responds in a given time interval, as described below.

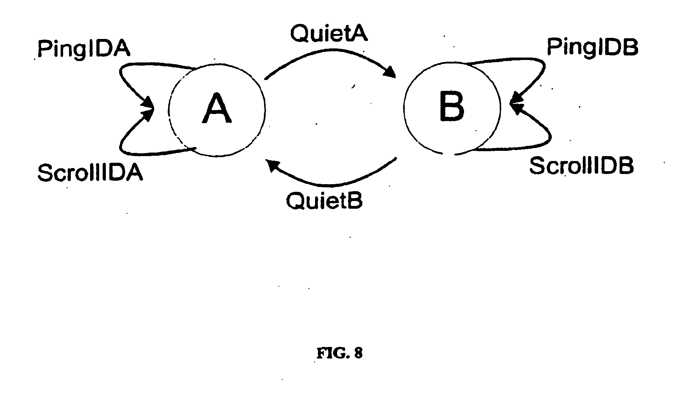

Figure 8 shows a state diagram in one embodiment of a two-state command protocol according to the present invention. The tag IC control logic implements the protocol by reacting to commands received from a reader. The state diagram shows all the states that a tag may take in response to command sets issued from a reader. In the exemplary embodiment of figure 8, the command set for State A consists of the commands QuietA, PingIDA and ScrollIDA. Similarly, the command set for State B consists of the commands QuietB, PingIDB and ScrollIDB. These commands, which comprise the basic command set for interrogating and identifying tags, are described in detail below. States A and B are intended to be persistent states, even in the absence of power derived from the reader's RF signal, although in certain embodiments they may be temporary states. After a long period of time, at least 20 seconds but possibly hours, State B will revert to State A. Tags in State A respond to PingIDA and ScrollIDA commands but not PingIDB and ScrollIDB commands. Upon receipt of a QuietA command, a tag in State A will enter into State B. Tags in State B respond to PingIDB and ScrollIDB commands but not PingIDA or ScrollIDA commands. Upon receipt of a QuietB command, a tag in State B will enter into State A.

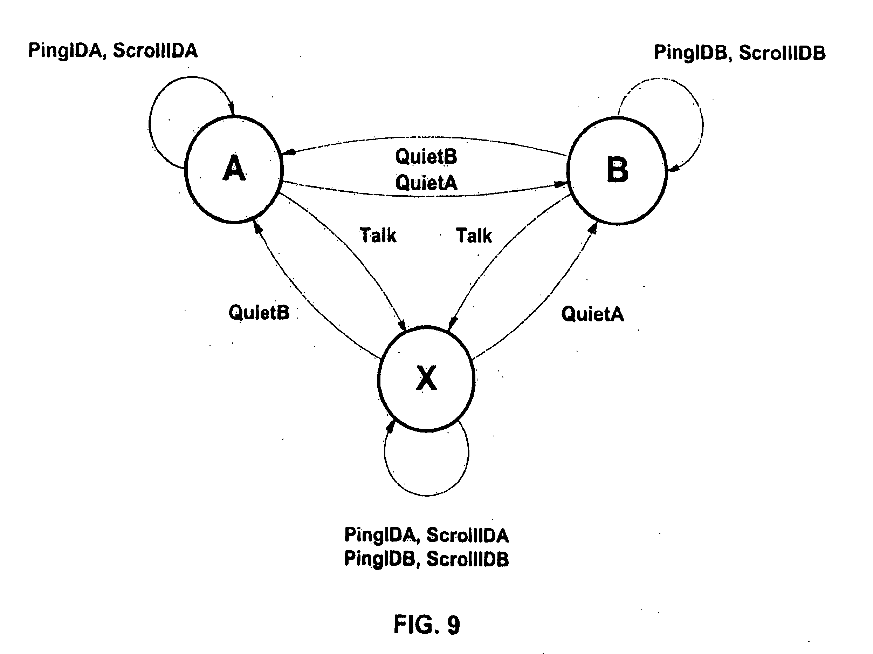

Alternatively, a command protocol may be embodied as a three-state protocol, as illustrated in figure 9, with the addition of a Talk command. When a tag is in State X, the ground state, it will respond to any valid State A or State B interrogation command, including PingIDA, ScrollIDA, PingID and ScrollIDB. Upon receipt of a valid QuietB command, a tag in State X will transition to State A. Upon receipt of a valid QuietA command, a tag in State X will transition to State B. When a tag is in State A, it will respond to the State A commands PingIDA and ScrollIDA. Upon receipt of a valid QuietA command, a tag in State A will transition to State B. Upon receipt of a Talk command, a tag in State A will transition to State X. When a tag is in State B, it will respond to the State B commands PingIDB and ScrollIDB. Upon receipt of a valid QuietB, a tag in State B will transition to State A. Upon receipt of a Talk command, a tag in State B will transition to State X. States A and B and C may be persistent states. After a long period of time, states A and B will revert to State X.

PingID, ScrollID and Quiet commands may be used to implement a binary search algorithm to sort, isolate and identify tags. PingId, ScrollID and Quiet commands may contain fields that specify matching criteria for all or some portion of a tag's identification code. In one embodiment, the command may contain a pointer field [PTR] to indicate the bit location in a tag's identification code where the matching operation is to begin. For example, the value of the pointer may specify a location relative to the least significant bit of the tag's identification code. The command may also contain a length parameter [LEN] to indicate the number of bits in the identification code to be matched, as well as a value parameter [VALUE] to specify the exact sequence of bits to be matched. In response, a tag addressed by the reader will attempt to match the value parameter with the ID data in its stored memory, starting at the pointer location, for the specified number of bits.

Tags matching data sent in a ScrollID command may reply by sending back their complete identification code, which may start from the least significant bit. Therefore, ScrollID commands may be used to look for specific tags or test for the presence of specific groups of tags in the field.

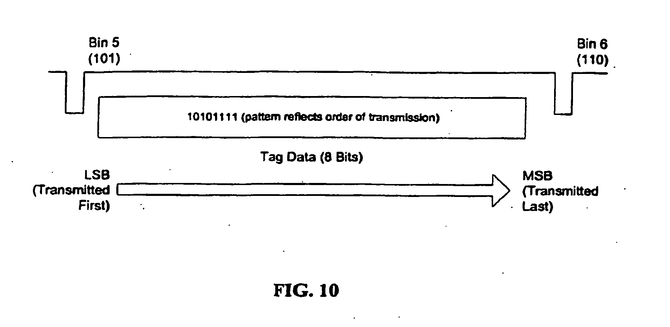

Tags matching data sent in a PingID command may reply with eight bits of the tag address, starting at a point immediately above the most significant bit of the matched data, and proceeding from there toward the most significant bit of the tag's address. Each tag response is placed in one of eight time bins delineated by clock ticks sent from the reader after a setup interval as previously described. The three bits of tag memory directly above the matched data may be used to determine the particular response interval for a tag reply. For example, tags having the next three bits above the matched data of '000' respond in the first interval, tags with the next three bits higher of '001' reply in the second interval and so on out to '111' in the eighth interval. These intervals are referred to as bins numbered zero (0) through seven (7). Figure 10 illustrates an example of a tag responding in Bin 5 (binary 101) because the first three bits of its response (101) correspond to the bin number. It will be appreciated by one skilled in the art that a tag may be configured to respond to a PingID command with greater or fewer than eight bits, and that a greater or fewer number of time bins may be defined by using more or less than 3 bits of the response. The PingID command is used extensively in the anti-collision algorithm described below.

Tags matching data sent in a Quiet command will respond by either changing state or remaining in their present state, depending on which Quiet command is transmitted by the reader. For example, if a Quiet A command is sent, matching tags in State A will transition to State B while matching tags in State B will remain in State B. Conversely, if a Quiet B command is sent, matching tags in State B will transition to State A while matching tags in State A will remain in State A.

The PingID command in either the A or B version divides a population of tags, in one exemplary embodiment, into eight sub-populations based on their addresses by binning tag responses into eight separate time slices. This binning provides the basis of an anti-collision algorithm that probes the binary address tree three bits at a time. Individual tags can be isolated from large populations in the field of the reader by issuing multiple PingID commands to the field, analysing the responses and eventually issuing the appropriate ScrollID command to identify individual tags.

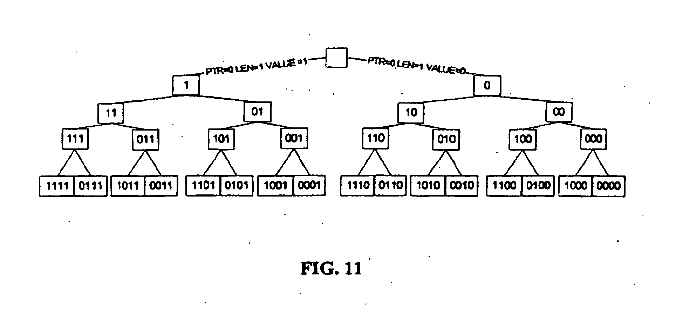

Figure 11 illustrates the use of the PingID command to execute a binary tree search on a population of tags. A PingID command with [PTR] = 0, [LEN]=1 and [VALUE] = 0 probes the right half of this tree (the zero branch) through the first four bits of tag memory. Similarly, a PingID command with [PTR] = 0, [LEN]=1 and [VALUE] = 1 probes the left half of this tree (the 1 branch) through the first four bits of Tag memory.

For the PingID command with [PTR] = 0, [LEN]=1 and [VALUE] = 0, tags with least significant bits (LSBs) of 0000 respond in bin 0, Tags with LSBs of 0010 respond in bin 1 and so on, out to bin 7 where tags with LSBs 1110 respond. Readers can look for backscatter modulation from the Tags in each of these bins and learn about the Tag population even if collisions make reading the eight bits of data sent by the tags difficult. . Merely the presence of backscatter in a given bin is an indication that one or more tags match the query. The bin number tells the reader what the next three most significant bits (MSBs) of tag address are.

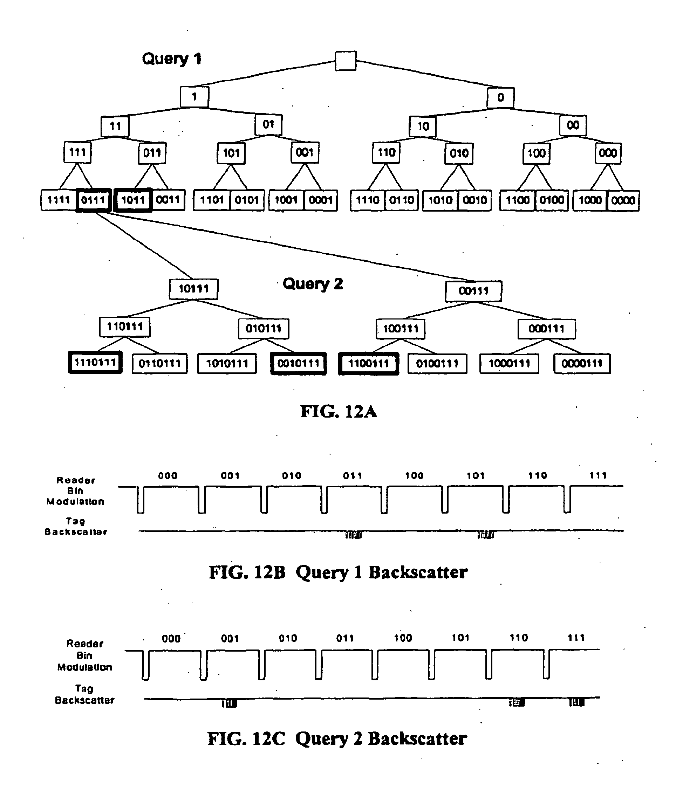

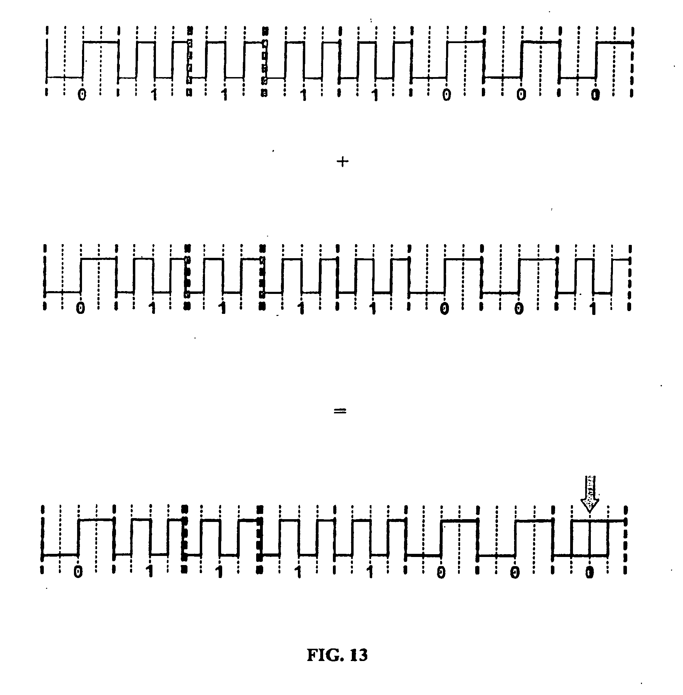

As an example, assume a population of tags in State A with multiple tags having addresses with LSBs of 0111 and 1011. A PingIDA command with [PTR]=0, [LEN]=1 and [VALUE]=1 will probe the left half of the tree, shown as Query 1 in figure 12A. The [VALUE] field of 1 matches the first bit of all the tags in this example, making them eligible to respond. During the reply interval, these tags will modulate the next eight bits of their address data above the matched portion. The bin in which they modulate is determined by the three LSBs of the data they will modulate. At the reader, backscatter modulation is observed in bins three (3) and five (5), as shown in figure 12B. Because multiple tags are modulating in each of these bins, contention is observed, but the reader now knows there are tags present, and that there are two distinct populations with the first four LSBs of 0111 and 1011, respectively. Furthermore, if the tags are programmed to respond with four interval bit cell modulation, as discussed above, the reader may be able to determine in which bits the multiple responses differ and thereby glean additional information about the tag population. Figure 13 illustrates contention detection in the case of two tags responding in bin 3 (LSBs= 011) and differing in their most significant bit. The superposition of the two responses creates an indeterminate response that is neither a logical zero nor a logical one, so the reader knows there are at least two tags present that differ in that bit position.

Using this information, the reader may issue a second PingIDA command to explore the population of tags in bin three, reserving the tags seen in bin five for later analysis. The population in bin three may be explored by issuing a PingIDA command with [PTR]=0, [LEN]=4 and [VALUE]=7 (binary 0111). The effect of this command is to explore three bits farther into the tree towards the MSB from the 0111 position, shown as Query 2 in figure 12A. The branches highlighted contain groups of tags that match the second query. These are the same tags that were responding to the first query in bin three. In this new query, tag modulation during the reply interval would show up in bins one (1), six (6) and seven (7) as shown in figure 12C. The reader now knows six bits of address information for these tags as well as at least three bits of information for the tag branch not pursued in the first query. The reader may continue in this vein, and use the PingIDA command to follow a branch through the tag ID space until it explores the entire tag address.

A preferred method to perform an analysis of a population of tags is to take advantage of the reader's ability to detect contention in the reply intervals. In the case The exemplary "divide by eight" anti-collision feature of the PingID command allows one to very quickly reduce the number of tags replying in each bin. For example, in a 100-tag population with random addresses, fewer than four PingID commands, on the average, are needed to isolate a tag, and in the process, other tags are singulated as well. If only a single tag replies in a given bin the reader can decode the eight (8) bits of information being sent from the tag and issue a ScrollID command to that Tag using the [PTR], [LEN] and [VALUE] data that successfully singulate the tag.

To utilize the two-state symmetry of the communication protocol, readers may start by performing an inventory as described above, using the PingIDA, ScrollIDA, and QuietA commands. After no further tags are responding, the reader may issue high level PingIDA commands again (e.g., commands at the root of the search tree) to explore any tags which were missed in the initial search. Note that a tag in state A would be counted even if it were only powered for a brief time, just long enough to see a command to synchronize its clock, a PingIDA command, a ScrollIDA command, and a QuietA command. At this point all tags that were inventoried in state A would be in state B. The reader can then begin an inventory of tags in state B using the PingIDB, ScrollIDB, and QuietB commands in a process completely analogous to the state A inventory. This second inventory would count all of the tags that were put into state B as a result of the state A inventory, as well as tags that were in state B initially and not counted in the state A inventory.

Any tag that is continuously in the field is counted in every A/B inventory cycle. Any tag that enters the field will be counted, in the worst case, in the second inventory after it enters the field. For tags at the edge of the detection range, as multipath interference changes, or as the tag or other objects are moved in the reader field, the power available to the tag fluctuates and may only be sufficient to power the tag for brief periods of time. Persistent quiet allows the majority of tags to be counted quickly and for high-level pings to be generated over and over again, seeking out tags that are only intermittently powered. The symmetrical commands extend this counting capability to tags that have just been inventoried and put into the quiet state, or as part of a continuous inventory process. One advantage of this approach is that it prevents the tags from ever entering a state where they are hard to count.

In one embodiment, tags within a population of tags may be assigned to different sessions to enable a reader, or multiple readers, to conduct inventories in orthogonal search spaces. For example, a tag memory may contain both a state bit and a session bit. The state bit may be set to 0 or 1, corresponding to states A and B, respectively, and the session bit may be set to 0 or 1, corresponding to session 1 or session 2, respectively.

One example of the use of two sessions is a portal reader, which is counting all tags coming through a portal, that wants to preferentially count pallets. The reader could run two simultaneous processes on the tag population. Session 1, for example, could be used by one process to sweep the entire population of tags between state A and state B to insure that all tags are counted, regardless of their initial state. Session 2 could selectively mask all pallet tags to state A for that session and all other tags to state B, and then count them preferentially in an interleaved process, without interfering with the ongoing inventory in the first process.

Another example of sessions would be a set of store inventory readers, set to synchronize their inventory types. The readers might use session 1 at the tags to inventory from state A to state B and back to state A. At the same time, a handheld reader might use session 2 to search for a specific product code by masking a sufficient portion of the product identification code to state A while masking all other tags to state B. It may then use session 2, state A commands to seek that specific tag or tag type. It will be appreciated that the number of sessions will only be limited by the number of bits in the tag memory that are devoted to session flags.

In some applications, it may be useful to exclude tags from an inventory that are not of interest, without running multiple sessions. Excluding tags that are not of interest is preferable to selecting tags that are of interest. A tag of interest that is missed by a selection command will be left out of the inventory. On the other hand, a tag that is not of interest, which is missed by an exclusion command, may be inventoried if its ID falls within the parameters of the search. However, once the tag is identified, it can be ignored.

Tags that are not to be counted may be excluded by using AB symmetry. During each phase of an inventory, A to B or B to A, commands may be issued to transfer tags that are not of interest to the other state without inventorying them. For example, if an inventory is being done from the A state to the B state, a command may be issued to place all tags which are not of interest into state B. These commands can be issued as often as desired during the inventory. The remaining tags are inventoried from state A to state B one at a time. If any tags are missed by the commands to exclude them, they are simply counted and the information is ignored. When it is determined that no more tags remain in state A, the same procedure may be run from the B state to the A state. Commands may be issued to place all tags that are not of interest into state A without inventorying them. Again, these commands may be issued as often as desired during this part of the inventory cycle. The remaining tags are inventoried from state B to state A, one at a time. If any tags are missed by the commands to exclude them, they are simply identified during the inventory and the information can be ignored.

This method of excluding unwanted tags from the inventory does not allow a complete Boolean expression to be issued that incorporate tag condition primitives as discussed in US patent 5,828,318. However, the selection methods described therein do not avoid the problem that some tags in the population may miss any particular command. It is desirable, therefore, to combine the specification of complete Boolean expressions over the primitive set conditions available at the tags with the ability of AB symmetry to work in the presence of unreliable communication with the tags. The methods of Boolean selection set out in US Patent 5,828,318 may be combined with the AB symmetric inventory process by using a separate three state methodology as described in U.S. Patent 5,828,318 to set up an unselected population of tags. This unselected population may be set up as often as desired, controlling their participation in the inventory process at a specific interval during the inventory, without affecting the population of the AB states.

In one embodiment of a combination of AB symmetry and Boolean selection, a three state method may be implemented. To avoid confusion, and without loss of generality, the three states of the three state machine described in US patent number 5,828,318 may be named state #1, state #2, and state #3. State #1 may be the unselected state, and tags that are in state #1 do not participate in the inventory.

During the initial phase of an inventory, A to B for example, commands may be issued to put tags that are not of interest into state #1. Both of the other two states of the three state machine described in U.S. Patent No. 5,828,318 would be treated as selected states. These commands may be issued as often as desired during the inventory, to achieve the desired Boolean selection criteria. The remaining tags are inventoried from state A to state B, one at a time. If any tags are missed by the commands to exclude them, they are simply counted and the information is ignored. Once a sufficiently large amount of time has been expended making sure no tags remain in the A state, the same procedure can be run from the B state to the A state. Commands may again be issued, and as often as desired, using the method described in U.S. Patent 5,828,318 to put tags that are not of interest into unselected state #1. The remaining tags are inventoried from state B to state A one at a time. If any tags are missed by the commands to exclude them, they are simply counted and the information is ignored. Thus, all of the tags of interest in the population are counted without having to count most of the tags that are not of interest. No tag is required to receive any particular command to achieve this objective. This allows a Boolean complete expression, using tag condition primitives, to be used to select the tags of interest out of the population.

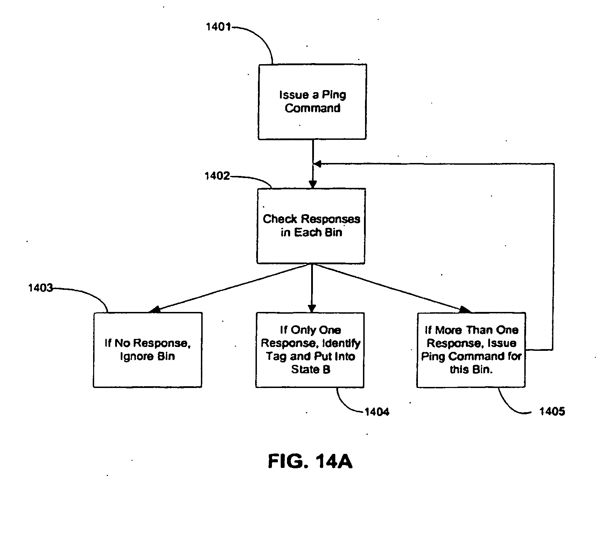

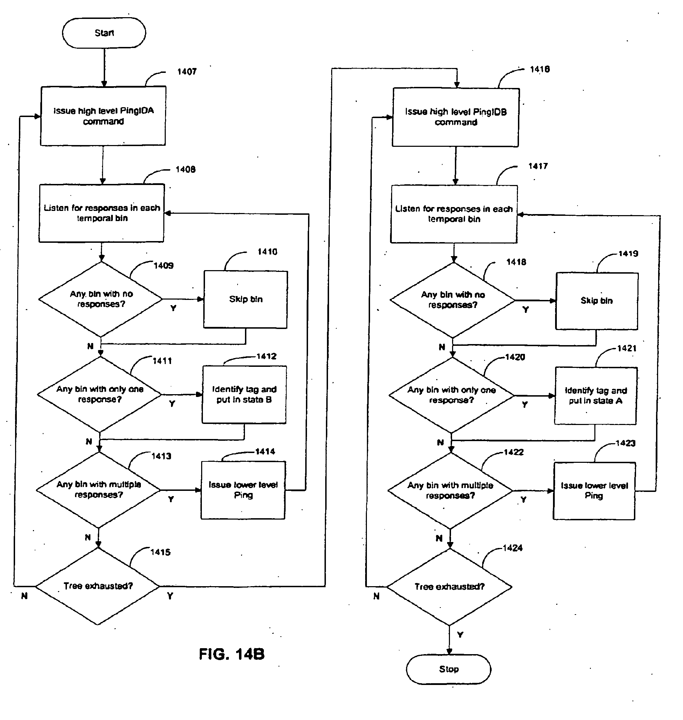

Figure 14 illustrates one embodiment of a method to identify devices using a deterministic search process. Figure 14A illustrates a basic recursive process that may be used to walk down a binary search tree. At step 1401, an initial Ping command may be issued. This initial Ping command may be a high level command that searches at or near the root of the binary tree, but it may commence the search at any level of the tree. At step 1402, Ping responses may be detected in a plurality of time bins as discussed above. The responses in each bin are evaluated. If a bin has no responses, that bin is ignored, step 1403. If a bin has only one response, that responding tag is identified and put into the other state, step 1404. If a bin has more than one response, that bin is searched by issuing a lower level ping command, step 1405, and the process is repeated until there are no more responses.

Figure 14B illustrates how the basic recursive search method of figure 14A may be implemented using A/B symmetry to deterministically singulate and count tags one at a time. To start, a reader issues a high level PingA command select one half of the search tree (e.g., as illustrated in figure 10), step 1407. The reader then listens for tag responses in each time bin, step 1408. Any bin with no responses is ignored, steps 1409 and 1410. If any bin has only one response, the tag responding in that bin is identified and placed in state B. steps 1411 and 1412. If a bin has multiple responses, the reader issues a lower level PingA command to separate the responses in that bin, steps 1413 and 1414. The reader then listens for responses to the lower level PingA command, repeating step 1408. The process repeats until there are no more responses at step 1413. If the entire tree has not been searched at step 1415, the search returns to another high level PingA command, step 1407, and the next branch of the tree is explored. If the entire tree has been searched at step 1415, all of the tags in state A have been inventoried and placed in state B. The search then continues with a high level PingB command, step 1416, to initiate a binary search for all tags in state B. The state B search, steps 1416 through 1424, are completely symmetrical with respect to the state A search, steps 1407 through 1415.

In the foregoing method, every tag in the population is identified when it sends its product identification code to the reader. A product identification code may contain 48, or even 96 or more bits. If the tag also sends a CRC checksum for error checking, the transmission time may be quite long. One approach to reducing the overall time required to conduct an inventory is the use of pseudorandom number pre-acknowledgements. In this approach, a tag that matches the interrogation code will respond with a pseudorandom number, with a high probability of being unique in its response interval, which is much shorter than the full EPC™ code.

. It will be apparent from the foregoing description that aspects of the present invention may be embodied, at least in part, in software. That is, the techniques may be carried out in a computer system or other data processing system in response to its processor, such as a microprocessor, executing sequences of instructions contained in a memory, such as reader memory 24 or tag memory 46. In various embodiments, hardwired circuitry may be used in combination with software instructions to implement the present invention. Thus, the techniques are not limited to any specific combination of hardware circuitry and software nor to any particular source for the instructions executed by the data processing system. In addition, throughout this description, various functions and operations are described as being performed by or caused by software code to simplify description. However, those skilled in the art will recognize what is meant by such expressions is that the functions result from execution of the code by a processor or controller, such as the microprocessor 23 or the controller 37.

A machine readable medium can be used to store software and data which when executed by a data processing system causes the system to perform various methods of the present invention. This executable software and data may be stored in various places including for example memory 24 or 46. Portions of this software and/or data may be stored in any one of these storage devices.

Thus, a machine readable medium includes any mechanism that provides (i.e., stores and/or transmits) information in a form accessible by a machine (e.g., a computer, network device, personal digital assistant, manufacturing tool, any device with a set of one or more processors, etc.). For example, a machine readable medium includes recordable/non-recordable media (e.g., read only memory (ROM); random access memory (RAM); magnetic disk storage media; optical storage media; flash memory devices; etc.), as well as electrical, optical, acoustical or other forms of propagated signals (e.g., carrier waves, infrared signals, digital signals, etc.); etc.

In the foregoing specification, the invention has been described with reference to specific exemplary embodiments thereof. It will be evident that various modifications may be made thereto without departing from the broade scope of the invention as set forth in the claims. The specification and drawings are, accordingly, to be regarded in an illustrative sense rather than a restrictive sense. Further detailed descriptions of certain exemplary embodiments of the present invention that may use aspects of a command structure that has at least a two-state symmetry or aspects of a three-state symmetry, as described herein, can be found in the following sections and in Appendix A.

### 1 OVERVIEW AND CONTEXT

This document describes a generation II RFID protocol. The goal of this invention is to achieve a fast, robust, compatible and extensible protocol for class 1, class 2, and class 3 RFID tags, while allowing very inexpensive implementations for both tags and readers. The RF transport layer of this protocol focuses on UHF operation. The protocol is expected to be applicable from 400MHz to 2.45 GHz.

### 1.1 Tag Classes

Four classes of Tags are envisioned to accommodate different applications and cost requirements.

Tags of different classes that meet the requirements of all of the design layers will be able to work together. Tags may also include a standardized wired I/O interface to sensors, clocks, displays and other devices.
● Class-I Simple passive, read-only backscatter Tags, designed for lowest cost production. Class I Tags have a one-time programmable memory.
   ○ Write once identity memory
   ○ 64 or 96 bit ePC Code.
   ○ Optional recycling code
● Class-II Passive backscatter Tags with higher functionality and Cost than Class I in addition to the Class I features:
   ○ Can write and read data into and out of tags.
   ○ read-write memory
   ○ May have battery power for non-communication purposes.
   ○ Optionally have sensors and data loggers.
● Class-III Semi-passive backscatter Tag. In addition to class II features:
   ○ Built-in battery or other energy source to support increased read range.
● Class-IV Modem-like semi-passive or active (transmitter) Tags that can wirelessly communicate with each other and/or other devices. This protocol only addresses class IV tags in as much as they will act like readers under this protocol, and will also emulate this protocol's class 1-3 tags to other readers.

### 1.2 Minimum Features

RFID systems defined by this specification provide the following minimum features:
● Identify single Tags in the field of a Reader
● Provide anti-collision functionality to manage reading of multiple Tags in the field of a Reader.
● Manage errors in the system from sources of RF interference and marginal Tags.
● Coexist with systems operating in compliance with local RF regulatory requirements.
● Coexist with systems operating in compliance with local RF regulatory requirements.

### 2 INTRODUCTION

### 2.1 Scope

The UHF system defined herein will include Readers (interrogators) and Tags (transponders). This document describes a reader talks first system using passive backscatter RF Tags.

The specification does not attempt to provide guidance on specific product definition or detailed aspects of hardware design, except where this is a consequence of defining the behavior across the air interface. Overall system architecture is considered a function of the marketplace. It is the prerogative of manufacturers to design superior or cost effective products embodying this specification.

The intent is to establish on open standard protocol for backscatter tags so that by using these international standards, a system may be defined which is open to all other systems obeying the same standards throughout the world.

### 2.2 Objectives

Establish an open, flexible, robust RFID VLC Tag specification to enable the development of very low-cost systems that will accelerate the broad adoption of RFID for high volume applications worldwide. In particular, satisfy item identification and tracking needs of the production, distribution, and retail supply chain. Provide flexibility to address future applications and to allow for future design.

Allow and encourage competition, by providing a structure for basic compatibility across systems. Sufficient detail is provided to enable vendors to design and manufacture Readers and/or Tags that will meet this compatibility goal.

### 2.3 Features of VLC Tags

● Small Integrated Circuit (IC) Area to Permit Low Cost
● Small Memory
● Precise Timing Not Required
● Atomic Transactions (State Storage Not Required)

### 2.4 VLC Tag Components

A VLC tag is comprised of an antenna and an integrated circuit, connected together. The I.C. implements the command protocol and contains the ePC code. The antenna receives the Reader interrogation signals and reflects the interrogation signal back to the reader in response to a modulation signal created by the I.C.

### - Drawing Omitted -

### 2.5 VLC Tag I.C. Block Diagram

The Tag I.C implements the VLC Tag by combining an RF interface and power supply, data detector, state logic, data modulator with memory.

### - Drawing Omitted -

The RF Interface and Power Supply converts the RF energy into the DC power required for the VLC I.C. to operate, and provides modulation information to the Data Detector and Timing block. The RF interface also provides a means of coupling the Tag Modulation signals to the antenna for transmission to the Reader.

The Data Detector and Timing block de-modulates the Reader signals and generates timing and data signals used by the State Logic.

The State logic provides the command and control functions that coordinate all of the functions of the VLC I.C. The state logic interprets data from the Reader, performs the required internal operations and determines if a Tag will respond to the Reader. The State Logic implements the State Diagram and Communications Protocol's described in Section 7.

The Tag Memory block contains the ePC code of the item tagged by a VLC Tag.

The Data Modulator translates the binary Tag Data that into a signal that is then applied to the RF Interface and then transmitted to the Reader.

### 2.6 Specification Layers

Flexibility and adaptability will be achieved with a "layered" specification, allowing different products to match the specifications of selected layers according to the needs of the target application.

The four layers addressed by this specification include:
● **Physical and Environmental Characteristics** => Defines a limited set of mechanical, environmental, reliability and manufacturing requirements.
● RF Transport Layer => Specifies RF coupling between Reader and Tag (may be frequency specific).
● Communication Layer => Defines communications / data protocols between Readers and Tags.
● Application Layer => Defines protocols and formats for communicating with Readers from Applications.

### 3 REFERENCED DOCUMENTS

### 3.1 Normative References

● ISO CD 18000-6 UHF RFID Protocols That Support ISO/IEC 18000-1.
● ISO/IEC 3309:1993. "Information technology - Telecommunications and information exchange between systems - High-level data link control (HDLC) procedures - Frame structure."
● ISO/IEC 7498-1:1994. "Information Technology-Open Systems Interconnection-Basic Reference Model: The Basic Model"; International Standards Organization ISO/IEC JTC1/SC21; 1994.
● US Code of Federal Regulations (CFR) Title 47, Chapter I, Part 15. "Radio Frequency Devices"; U.S. Federal Communications Commission, 1999.

### 3.2 Informative References

● MTT Auto-ID Center Publications: httn://www.autoidcenter.org/
● 860MHz-930MHz Class I Radio Frequency Identification Tag Radio Frequency & Logical Communication Interface Specification Candidate Recommendation, Version 1.0.1, MIT-AUTOID-WH-007
● The Physical Markup Language - A Universal Language for Physical Objects, D.L. Brock, MIT-AUTOID-WH-003, Feb 2001.
● The Electronic Product Code - A Naming Scheme for Physical Objects, D. L. Brock, MIT-AUTOID-WH-002, Jan 2001.
● The Compact Electronic Product Code A 64-bit Representation of the Electronic Product Code, D. L. Brock, MIT AUTO-ID-WH-008, Nov. 2001.
● The Networked Physical World Proposals for engineering the next generation of computing, commerce, and automatic-identification, MIT-AUTOID-WH-001, Dec 2000.
● IEEE 802.11. "Standard for Wireless LAN: Medium Access Control (MAC) and Physical Layer (PHY) Specification"; Institute of Electrical and Electronics Engineers; 1997.
● ETSI EN 300 220-1 V1.3.1 (2000-09) "ElectroMagnetic Compatibility and Radio Spectrum Matters (ERM); Short Range Devices (SRD); Radio equipment to be used in the 25 MHz to 1 000 MHz frequency range with power levels ranging up to 500 mW; Part 1: Technical characteristics and test methods"; European Telecommunications Standards Institute (ETSI) Reference: REN/ERM-RP08-0403-1.
● ETSI EN 300 761-1 V1.2.1 (2001-06) "ElectroMagnetic Compatibility and Radio Spectrum Matters (ERM); Short Range Devices (SRD); Automatic Vehicle Identification (AVI) for railways operating in the 2,45 GHz frequency range; Part 1: Technical characteristics and methods of measurement" European Telecommunications Standards Institute (ETSI). Reference: REN/ERM-RP08-0411-1.
● RCR STD-33A. "Radio Equipment for Low Power Data Communications System Radio Station"; Japan Research and Development Center for Radio Systems; 17 Mar 1993.
● NTIA Red Book Chapter 7 Annex K. "The NTIA Manual of Regulations & Procedures for Federal Radio Frequency Management"; National Telecommunications and Information Administration; Edition 9/95, with Revisions for September 1996, January and May 1997.
● NTIA Orange Book, "The NTIA Manual of Regulations & Procedures for Federal Radio Frequency Management"; National Telecommunications and Information Administration.
● JEDEC Standard JESD22-A114-B, "Electrostatic Discharge (ESD)Sensitivity Testing Human Body Model (HBM)", June 2000.

### 4 RFID TERMINOLOGY

### 4.1 Abbreviations

| | |
|---|---|
| AM | Amplitude Modulation |
| API | Application Programming Interface |
| ASK | Amplitude Shift Keying |
| bps | Bits per second |
| CCAG | Cheap Chip Action Group |
| CRC | Cyclic Redundancy Check |
| CW | Continuous Wave |
| DLL | Data Link Layer (OSI Model) |
| EME | Electromagnetic Exposure |
| ePC | Electronic Product Code |
| ESD | Electrostatic Discharge |
| FCC | Federal Communications Commission |
| FM | Frequency Modulation |
| FSK | Frequency Shift Keying |
| kbps | kilobits per second |
| kHz | kilohertz (10³ Hertz) |
| FM | Frequency Modulation |
| HBM | Human Body Model |
| LSB | Least Significant Bit |
| ms | milliseconds (10⁻³ seconds) |
| MHz | megahertz (10⁶ Hertz) |
| MSB | Most Significant Bit |
| ns | nanoseconds (10⁻⁹ seconds) |
| ppm | Parts per million (10⁻⁶) |
| PM | Phase Modulation |
| PSK | Phase Shift Keying |
| RAM | Random Access Memory |
| RF | Radio Frequency |
| RFID | Radio Frequency Identification |
| RTF | Reader Talks First |
| us | microseconds (10⁻6 seconds) |
| VLC | Very Low Cost |
| V/m | Volts per Meter |

### 4.2 Numeric Conventions

In this document, references to bits in the memory of RFID Tags are made extensively. To avoid confusion, the following terms are introduced here:
When referring to bits in Tag memory, the words "up" or "higher" will refer to the Most Significant Bit (MSB) direction and the words "down" or "lower' will refer to the Least Significant Bit (LSB) direction.
***Example:*** The binary representation of the decimal number seven (7) is 0111. Shifting each bit "up" or "higher" by one yields the decimal number fourteen (14), represented in binary as, 1110.

### 5 PHYSICAL/ENVIRONMENTAL CHARACTERISTICS

### 5.1 VLC Tags

### 5.1.1 Antenna

The intent of this specification is to define functional capabilities without specifying Tag antenna construction or how Tags are to be applied to various items. Tag size and performance will vary based upon the material being tagged and operating frequency. It is expected that Tag antenna design and application variations will be selected by vendors to yield optimum performance.

### 5.1.2 Range

It is recognised that tags will have a range of performance, with some applications only requiring a short range. For that reason, a tag is allowed to meet this standard without any particular minimum range. For reliable system performance in cases where many object tagged by different manufacturer's tags are being inventoried, however, tags will need to meet certain minimum range specifications. This is specified by means of range group. A ePC class I range group A tag is, as a minimum, readable at 95% of orientations at a range of 2 meters in an anechoic chamber beam *when attached to the intended object.* The test conditions are: 1 watt emission by the reader, 6 db gain antenna, circular polarization, and a backscatter signal of -65dbm at the reader antenna terminals. Tags in range group B are required to be readable under the same conditions at 4 meters, but with a backscatter of at least -70dbm at the reader antenna terminals.

### 5.1.3 Temperature

● Minimum operating temperature range: -25°C to +65°C
● Minimum storage temperature range: -50°C to +85°C

### 5.1.4 Photosensitivity

● Tags should function while exposed to direct sunlight.
● No loss of stored data shall occur following direct exposure to sunlight for a period of 200 hours and at a temperature not exceeding +70 C.

### 5.1.5 ESD

● Tag ESD withstanding capability >1.5 kV HBM according to JEDEC Standard JESD22-A114-B.

### 5.1.6 RF Stress

● RF stress - Tag shall be operable following transient exposure to 400 V/meter for 1 ms and continuous exposure to 50 V/m.

### 5.2 VLC Readers

Due to the many varied applications and environments, physical attributes of Readers are not defined in this specification. Readers are defined by functional characteristics only. However, the following is assumed.
● This specification should impose only minimal constraints on the way shelves are stocked.
● To support wide application, Readers will be designed for operation at unlicensed power levels under the local regulatory environment.
● The Reader size and shape will be defined by antenna design and available space in the target environment.
● Reader antennas may have different polarizations (linear, circular, elliptical) to yield the best performance for an application.
● The bandwidth of the reader should be appropriate for the particular UHF band of operation.
● Unit-to-unit variation in performance, specifically sensitivity variation, should be within 3 dB for identical Reader models when measured in an open environment. This is to permit interchangeability of Readers and simplify the task of setup and maintenance.

### 6 RF TRANSPORT LAYER

The RF Transport Layer defined herein specifies parameters for UHF operation. Performance criteria have been designed to work, as far as possible, at different parts of the frequency spectrum. Performance variation is anticipated under different regulatory environments.

### 6.1 RF Power Management

Reader RF Power Management will be consistent with local regulations to allow for unlicensed operation. For operation in North America, readers will maintain RF emissions consistent with FCC part 15.247 limits and Electromagnetic Exposure (EME) limits. RF Power levels and antenna designs for Readers in the US shall be consistent with these regulations. In Europe, modulation characteristics will be adjusted to allow for unlicensed operation in that regulatory environment.

### 6.2 Half-Duplex Operation

The Tag-to-Reader and Reader-to-Tag link is defined as half-duplex. Readers initiate communication with Tags by sending a command sequence. The reader then provides a reply period for the tag by transmitting an un-modulated carrier while listening for a reply from the Tag. The tags are not expected to be able to detect reader modulation while they are replying.

### 6.3 Frequency

The RF transport layer of this specification is applicable to the following bands: North American 902-928 MHz and 2400.0-2483.5 MHz, existing European 869.4-869.65 MHz, proposed 865.6-867.6 MHz European, and UHF bands near 2450 MHz. Each specific frequency band and country may have differences in bandwidth, power, modulation and regulatory certification. It is hoped that as additional RF Transport Layer Specifications are developed, the other layers (i.e. Communication Layer, Application Layer, and Physical and Environmental Characteristics) will be minimally impacted.

The UHF bands called out above were chosen for the first VLC Tag products for the following reasons:
● High speed (up to 70.175 Kbps in North America) Reader-to-Tag system data rate.
● 140.35 kbps or faster Tag-to-Reader system data rate.
● Consistent operation with high "hit rates" at ranges of 2 meters or more under typical conditions, 5 meters or more in an anechoic chamber.
● Relatively small Tag and Reader antennas.
● Human exposure to low-level UHF is already common and accepted worldwide (i.e. cellular telephones).
● North American bands are wide enough to permit significant frequency hopping.

Performance, read range, and speed of operation are expected to vary depending on the regulatory environment under which the system is deployed.

### 6.4 Reader-to-Tag Modulation

Readers are in one of three available states; OFF, (emitting no RF energy), CW (emitting RF energy at some power level without amplitude modulation), and Active (emitting RF energy with amplitude modulation).

In the Active state, the Reader-to-Tag link makes use of Amplitude Shift Keying (ASK) with a minimum modulation depth of 20%. Modulation shape, depth and rate of modulation are variable within the limits described below. Compliant Tags will adjust their timing over a range of modulation rates to lock to reader transmissions automatically.

### Reader to Tag Modulation

### - Drawing Omitted -

The modulation parameters in general are illustrated in Figure A.4, and in Table T.1, North American Modulation Pulse Parameters and Table T.2, European Modulation Pulse Parameters. Specific values are a function of the local regulatory environment.

### - Drawing Omitted -

### Definitions:

| | |
|---|---|
| Tₒ | Elemental Clock Cycle period. Time for a single bit sent from Reader to Tag. |
| Tᵣ | Rise time of modulation envelope, 10% to 90% of Modulation amplitude variation. |
| T_{f} | Fall time of modulation envelope, 90% to 10% of Modulation amplitude variation |
| T_{fwhm} | Pulse width of modulation envelope measured at 50% of Modulation amplitude variation. |
| Mod | Amplitude variation of modulated carrier. |
| Ripple | Peak to Peak variation in modulation overshoot and undershoot at edges of intended modulation. |
| D_{mod} | Peak to Peak variation in modulation depth from intended value. |
| T_{0Tol} | Master Clock Interval Tolerance, Basic accuracy of reader signaling. |
| T_{CW} | Minimum CW time immediately before a command. |
| T_{Coast} | Maximum Time duration between EOF and the next command, to ensure that the tag clock is sufficiently accurate to decode the next command |

For all Reader modulation sequences, it is anticipated that the Reader clock must be stable to within 1% over the length of a transaction.

All other "Elemental Clock Cycle" timings are proportional to the modulation clock frequency To.

### 6.4.1 North American Parameters

In North America, data rates at or above 70.175 kbps should be achievable under FCC part 15.247 regulations with the modulation parameters shown in the Table T.1. All times and frequencies scale with To, except as noted.

**Table T.1, North American Modulation Pulse Parameters**

| ***Nominal Values for the Pulse Modulation Parameters*** | ***Description*** | ***North American Operation*** |
|---|---|---|
| To | Master Clock Interval | 14.25 us |
| T**_{0Tol}** | Master Clock Interval Tolerance | ± 1% Maximum |
| **1/T₀** | Data Rate | 70.18 Kbps |
| **T_{fwhm0}** | Half Width of Binary 0 Feature (1/4 * T0) | 3.56 us |
| **T_{fwhm1}** | Half Width of Binary 1 Feature (1/2 * T0) | 7.125 us |
| MOD | Modulation Depth | 20% |
| **D_{MOD}** | Variability in Modulation Depth | 20%-100% |
| **T_{f}** | Fall Time | 300 ns nom. |
| **Tᵣ** | Rise Time | 300 ns nom. |
| **Ripple** | Ripple | 10 % pp |
| **T_{fwhmBin}** | Half Width of Bin Modulation Feature, Low Time (1/2 * T₀) | 7.125 us |
| **T_{fwhmBinRWF@F}** | Half Width of Bin Modulation Response Window, F2F mode (8 * T₀) | 114.00 us |
| **T_{fwhmBinRWFM)}** | Half Width of Bin Modulation Response Window, FM0 mode (4 * To) | 57.00 us |
| Tcw | Minimum CW time preceding any command, may overlap with response CW interval (4 * T₀) | 57.00 us min |
| **T_{Coast}** | Time duration between EOF and the next command | 5 ms max.(does not scale with T₀) |

### 6.4.2 European Parameters

In Europe, bandwidth issues under ETSI EN 300-220 force a slower Reader-to-Tag modulation rate to meet spectral requirements. The parameters in Table T.2 are recommendations based upon current European regulations, and are subject to change as regulatory requirements evolve in the region. Tags are required to respond correctly to readers with clocks intermediate between the North American and European rates, as long as the features have the given ratios.

**Table T.2, European Modulation Pulse Parameters**

| ***Nominal Values for the Pulse Modulation Parameters*** | ***Description*** | ***European Operation*** |
|---|---|---|
| **Tₒ** | Master Clock Interval | 66.67 us |
| **T_{0Tol}** | Master Clock Interval Tolerance | ± 1% Maximum |
| **1/T₀** | Data Rate | 15.00 Kbps |
| **T_{ftwhm0}** | Half Width of Binary 0 Feature (1/4 * T₀) | 16.66 us |
| **T_{fwhm1}** | Half Width of Binary 1 Feature (1/2 * T₀) | 33.33 us |
| **MOD** | Modulation Depth | 20% |
| **T_{fwhmBin}** | Half Width of Bin Modulation Feature, Low Time (1/2 * T₀) | 33.33 us |
| **T_{fwhmBinRWF2F}** | Half Width of Bin Modulation Response Window, F2F mode (8 * T₀) | 533.33 us |
| **T_{fwhmBinRWFM0}** | Half Width of Bin Modulation Response Window, FM0 mode (4 * T₀) | 270 us |
| **Tcw** | Minimum CW time preceding any command, may overlap with response CW interval. (4 * T₀) | 270 us min |
| **T_{Coast}** | Time duration between EOF and the next command | 5 ms max. |

### 6.4.3 Reader-to-Tag Modulation Encoding

Readers communicate with the Tag field using two types of modulation: Data *Modulation* and *Bin Modulation. Data Modulation* is used to transmit data from the Reader to the Tags. *Bin Modulation* is used during the Tag reply interval during the anti-collision algorithm to specify time slots for Tag responses.

### - Drawing Omitted -

All transactions begin with a minimum CW period preceding each command to allow the tag to locate the beginning of the command

During the Data Modulation of a command, Active Readers provide a master clock signal to Tags in their neighborhood. The time between clock ticks, T₀, determines the Reader-to-Tag data rate.

The Tags are synchronized to the Active Reader on the negative-going edge of the low interval of the RF envelope. All subsequent signaling is tied to this fundamental frequency in a proportional manner.

Binary data from Reader to Tag is encoded as pulse width modulation of the low level pulse. Logical zeros are defined as a modulation whose width is one fourth (1/4) of the master clock interval, To. Logical ones are encoded as a modulation whose width is one half (1/2) of the master clock interval, To.

### - Drawing Omitted -

During Bin Modulation eight (8) pulses are sent by the Reader to delineate between nine (9) time intervals. The first interval, after the EOF, is used for Tags to set up for modulation. The remaining eight are used to delineate response intervals for the Tags.

The width of the delineation pulse, T_{fwhmBin}, is (1/2)T₀ or the equivalent of a logical one. The width of the intervals in F2F mode, T_{fwhmBinRWF2F}, is eight (8) times To. The width of the intervals in FM0 mode, T_{fwhmBinRWFMO}, is four (4) times To.

After the last pulse, the Tag must be ready to receive the next command after the minimum CW time, and be able to decode a command received within a T_{coast} interval. Refer to Figure A.7, Bin Modulation for illustration.

### - Drawing Omitted -

A single Bin Response Window is illustrated in Figure A.8.

### - Drawing Omitted -

### 6.4.4 Coast Interval

In order for the Tag to be able successfully decode the next command, the reader must start the next transaction within the T_{coast} interval. This restriction does not apply when the carrier has been turned off for sufficient time for the tag to loose DC power, as the tag will re-synchronize at the next power up.

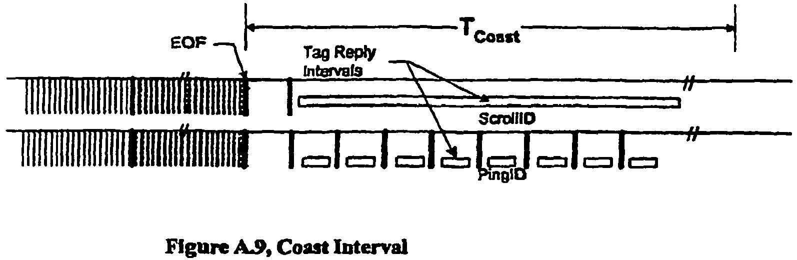

### 6.4.5 Data Modulation Timing

Modulation of the pulse width (RF interruption period) is used for data transmission to Tags. Two symbols are defined by the low time and scale with To. T_{data0} is used to encode binary "0" data. T_{data1} is used to encode binary "1" data. One symbol is transmitted per each To interval. Refer to Table T.2, European Modulation Pulse Parameters, for nominal time values for USA and European operation.

**Table T.3, Reader Data Modulation Timing**

| | |
|---|---|
| | |
| Reader Logic 0 | T_{data0} = 1/4 of T₀ |
| Reader Logic 1 | T_{data1} = 1/2 of T₀ |

### 6.4.5.1 Data Modulation Timing Data "0"

Data Modulation Timing, T_{data0}, for Reader-to-Tag clocking when data = "0" is encoded by a "narrow" 1/4*T₀ pulse width modulation.

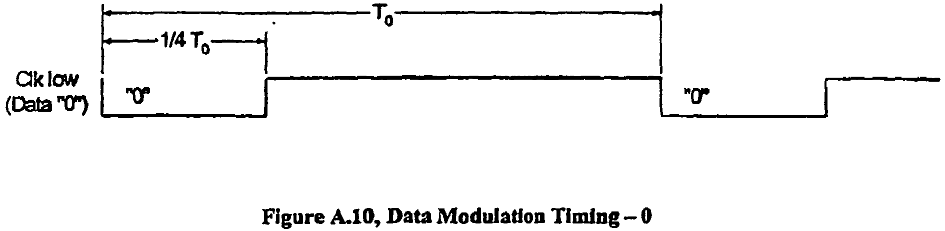

### 6.4.5.2 Data Modulation Timing Data "1"

Data Modulation Timing, T_{data1}, for Reader-to-Tag clocking when data = "1" is encoded by a "wide" 1/2* To pulse width modulation. This timing is also used for Bin Pulse features.

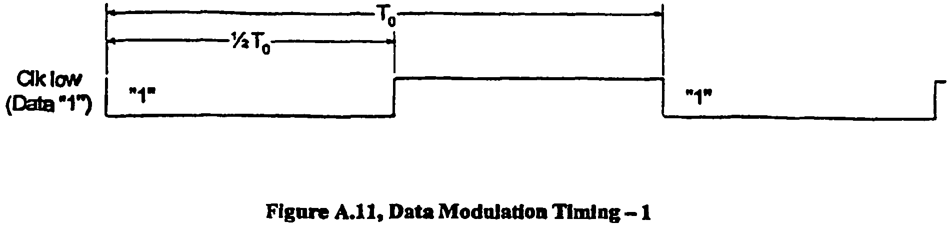

### 6.4.6 Bin Modulation Timing

Modulation of negative pulse width (RF interruption period) used for designating response bins for Tags after a PINGID command is issued. Refer to Table T.2, European Modulation Pulse Parameters, for nominal time values for USA and European operation.

**Table T.4, Reader Bin Modulation Timing**

| ***Reader Bin Modulation Tining*** | |
|---|---|
| Reader Bin Designation | T_{fwhmBin} = 1/2 of To |
| Bin Width FM0 mode | T_{fwhBinRWFM0} = 4 * T₀ |
| Bin Width F2F mode | T_{fwhmBinRWF2F} = 8 * Tₒ |

Bin Modulation Timing for a Reader with a 70.175 KHz master clock interval is illustrated in Figure A. 12.

### - Drawing Omitted -

### 6.4.7 PingID Reply Bin Collapse

The Reader may optionally shorten the time for a **PingID** transaction by shortening the Bin Response Window. The Reader may listen for a Tag reply during the Bin Response Window, and if a reply has NOT been started by a Tag, prior to expiration of ½ of Bin Response Window shorten the duration between the Bin Modulation pulses for that bin down to 2* To. This may be applied for each of the eight bins in which the Reader detects no reply from a tag. The middle bin in Figure A.13 has been shortened due to no Tag reply. The end of bin 7 is delineated by the start of the next command, and may not be reduced in length shorter than the minimum T_{CW} interval required for the next command. This is intended to allow the tag to use a hardware device, independent of the clock, to determine when to open a PLL window to sync its clock at the start of a command packet.

A bin should not be collapsed if a Tag is responding in that bin. If the reader collapses an occupied bin, the reply of the occupying Tag may overlap the collapsed bin and continue into the next bin. The Reader may see the reply as a collision in the next bin, and will need to resolve with subsequent search commands.

### - Drawing Omitted -

### 6.5 Tag-to-Reader Modulation

The Tag-to-Reader modulation is selected by the [MODULATION] bit, and is either FM0 in the case of [MODULATION]=0, or F2F, in the case of [MODULATION]=1 All tags are required to implement both FM0 and F2F encoding. The primitive for each modulation method is the same, with the same timing, but two FM0 primitives are used to encode each bit of F2F.

Comment: the F2F encoder can be implemented by using a FM0 encoder preceded by a bit inverter and encoding twice for each bit in succession.

### FM0:

Tags reply to Reader commands with backscatter modulation. There is a change of backscatter state between each bit period, and a 0 bit has an additional change of backscatter state at the center of the bit time. The nominal data rate for Tag to Reader is four times the Reader to Tag Rate, but may vary up to ±10% over an 80 bit response window due to oscillator drift in the Tag. It is anticipated that FM0 will be used in cases where the backscatter noise environment can be controlled, i.e. shielding around fluorescent lamps, etc.

### F2F:

Tags reply to Reader commands with backscatter modulation that follows a four (4)-interval bit cell encoding scheme. Two (2) transitions are observed for a zero (0) and four (4) transitions are observed for a one (1) during a Bit Cell. The nominal data rate for Tag to Reader is twice the Reader to Tag Rate, but may vary up to ±10% over an 80 bit response window due to oscillator drift in the Tag.

### Definitions:

| | |
|---|---|
| T₀ | Elemental Clock Cycle period. Time for a single bit sent from Reader to Tag. |
| T_{tagbitcell} | Tag to Reader bit cell interval. |
| Tag Data Rate | Tag to Reader Nominal Data Rate of for the modulated backscatter. |
| T_{tagscrollDel} | Reply delay from Reader EOF to start of Tag ScrollID Reply |
| T_{tagpingDel} | Reply delay from Reader EOF to start of Tag PingID Reply |
| T_{tagreplyNom} | Tag to Reader reply duration for 88 bit ScrollID reply |
| ΔT_{tagbitcell} | Tag to Reader bit cell interval variation measured at the last bit of a ScrollID reply. |
| T_{Coast} | Maximum Time duration between EOF and the next command. |

### 6.5.1 North American Parameters

**Table T.5, North American Tag to Reader Modulation Parameters,**

| ***Tag to Reader Modulation Parameters*** | ***Description*** | ***North American Operation*** |
|---|---|---|
| To | Master Clock Interval | 14.25 us |
| T_{tagbltcell} | Tag to Reader bit cell interval (To / 2) | F2F: 7.13 us |
| | | FM0: 3.56 us |
| Tag Data Rate | Tag to Reader Nominal Data Rate (2 / T₀) | F2F: 140.35 kbps |
| | | FM0: 280.70 kbps |
| T_{tagscrollDel} | Reply delay from end of command to start of Tag ScrollID Reply (4 * T₀) | 57.0 us |
| T_{tagpingDel} | Reply delay from end of command to start of Tag PingID Reply (2 * T₀) | 29.0 us |
| T_{tagreplyNom} | Tag to Reader reply duration for 88 bit ScrollID reply | F2F:627 us |
| | | FM0:313 us |
| | F2F:(T₀ / 2 * 88 bits) | |
| | FM0:(T₀/ 4 * 88 bits) | |
| ΔT_{tagbitcell} | Tag to Reader bit cell interval variation at last bit of 88 bit ScrollID reply | ±10 % max |
| T_{Coast} | Time duration between EOF and the next command | 5 ms max. |

### 6.5.2 European Parameters

**Table T.6, European Tag to Reader Modulation Parameters**

| ***Tag to Reader Modulation Parameters*** | ***Description*** | ***European Operation*** |
|---|---|---|
| To | Master Clock Interval | 66.67 us |
| T_{tagbitcell} | Tag to Reader bit cell interval (T₀/2) | F2F: 33.33 us |
| | | FM0: 16.67 us |
| Tag Data Rate | Tag to Reader Nominal Data Rate (2/T₀) | F2F: 30.00 kbps |
| | | FM0: 60.00 kbps |
| T_{tagscrollDel} | Reply delay from Reader EOF to start of Tag ScrollID Reply (4 * T₀) | 267 us |
| T_{tagplugDel} | Reply delay from Reader EOF to start of Tag PingID Reply (2 * T₀) | 133 us |
| **T_{tagreplyNom}** | Tag to Reader reply duration for 88 bit ScrollID reply | F2F:2.93 ms |
| | | FM0:1.47 ms |
| | F2F:(T₀/2 * 88 bits) | |
| | FM0:(T₀/4 * 88 bits) | |
| ΔT_{tagbitcell} | Tag to Reader bit cell interval variation at last bit of 88 bit ScrollID reply | ±10 % |
| **T_{Coast}** | Time duration between EOF and the next command | 5 ms max. |

### 6.5.3 ScrollID Reply Delay

The delay from the end of data to the start of a reply to a ScrollID or VerifyID Command, T_{tagscrollDel}, is illustrated in Figure A.14.

### - Drawing Omitted -

### 6.5.4 PingID Reply Delay

The delay from a Bin Pulse to the start of a reply to a PingID Command, T_{tagpingDel}, is illustrated in Figure A.15.

### - Drawing Omitted -

### 6.5.5 ScrollID Reply Duration

The duration of a ScrollID Reply, T_{tagreplyNom} is illustrated in Figure A.16.

### - Drawing Omitted -

### 6.5.6 Tag to Reader Bit Cell Variation

The variation in the bit cell duration ΔT_{tagbitcell} is illustrated in Figure A.17.

### - Drawing Omitted -

### 6.5.7 Tag to Reader Bit Cell

### FM0:

The state of tag backscatter is changed at the edge of each bit, and an additional change of state occurs in the middle of bit intervals which correspond to a "0" data bit. A final bit interval transition is inserted at the end if it is needed to leave the modulation in the high state (not in the crowbar state).

### - Drawing Omitted -

### F2F:

The Tag backscatter is modulated by a selection of one of two symbols per bit cell. The bit cell T_{tagbitcell} is defined as:

### - Drawing Omitted -

Under this encoding scheme there are always transitions in the middle of a bit and unlike Manchester encoding, the sense of zeros and ones are maintained when the code is inverted. The following figures illustrate this inversion.

### - Drawings Omitted -

### 6.6 Contention Detection

Contention detection is important for most anti-collision algorithms. When two Tags have the same clock rate and differ by only one bit, the backscatter modulation waveform yields a difference that should be readily detected by the Reader. Shown below are two cases where Tags of equal backscatter modulation intensity are communicating simultaneously. Differences in backscatter modulation intensity can also be used to aid in detection of contention.

### 6.6.1 Case I

### - Drawing Omitted -

### 6.6.2 Case II

If the two Tags do not have the same clock rate, detection of multi-Tag contention becomes even easier. The figure below illustrates the difference in signal between two Tags that differ by one bit in the modulation with a speed difference of 50%

### - Drawing Omitted -

### 7 COMMUNICATION LAYER

### 7.1 Overview

System communication follows a two-stage command-reply pattern where the Reader initiates the transaction (Reader Talks First, RTF). In the first phase, the Reader provides power to one or more passive Tags with continuous wave (CW) RF energy. Tags power up ready to process commands after one command which is used for synchronization of its clocks. The Reader transmits information to the field by amplitude modulation using the Reader-to-Tag encoding scheme described above. On completion of the transmission, the Reader ceases modulation and maintains RF to power the Tags during the reply phase. Tags communicate with the Reader via backscatter modulation during this period using the four (4)-phase bit encoding scheme described above.

Basic Commands are designed to limit the amount of state information the Tags have to store between transactions. The power available to a passive Tag is a complicated function of transmitted power, Tag/Reader antenna orientations, local environment and external sources of interference. Tags on the margin of the RF field are powered unreliably and therefore cannot be counted on to maintain a memory of previous transactions with the Reader. In particular, moving tags or objects may cause the tag to have power only for brief intervals, primarily due to multipath interference. This protocol is designed to allow the efficient counting of tags under these conditions by minimizing the total transaction time, and by allowing rapid recovery from missed commands. Tags which have power for as little as 3 milliseconds can be inventoried. There is only one bit of state between sorting commands, and the impact of that state is further lessened by symmetrizing the command set about those two states, as described below.

### 7.1.1 VLC Tag States

The Tag IC state logic block implements the VLC tag logic by reacting to commands received from a Reader or Programmer according to the following general state diagram. These State diagrams are included to convey the concept, and general function of the Tag I.C and actual implementation may be manufacturer and technology dependent.

### - Drawing Omitted -

### 7.1.1.1 VLC Tag State Diagram

The tag state diagram shows all the states that a tag may take between **command groups¹**. The DEAD state is a permanent state. States A and B are intended to be persistent states, even in the absence of power. After a long period of time, at least 20 seconds but possibly hours, state B will revert to state A. In state A, all tags respond to PingIDA and ScrollIDA commands but not PingIDB and ScrollIDB commands. In state B, PingIDB and ScrollIDB commands are responded to, but not PingIDA or ScrollIDA commands. If the persistent state memory has expired, the tag will enter into state A upon power up, or optionally enter into a state where it will execute all ping and scroll commands (see section 7.1.2 for alternate tri-state embodiment).

The tag will also maintain a volatile memory of whether it was addressed by the last ping command, and if so, a memory of which ping bin it was in. An invalid command will reset this memory.
¹ A command group is a set of sequential commands which use only the relative addressing modes, after the fist command in the group. The volatile memory used for the relative addressing modes expires on loss of power, loss of sync, command error, and upon the use of any other addressing mode.

### 7.1.1.2 Power Up

Upon power up, the tag will look for a long CW interval followed by a short RF on interval. This pattern is guaranteed to only occur at the beginning of a command, and the command will provide a minimum of 15 bits. The tag will sync its clock to the falling edges provided by that command, but is not required to act upon the first command after power up. It will then enter into state A or B depending on the state of its persistent state memory. Power on reset will clear the "addressed by last ping" memory. It will maintain its clock with sufficient accuracy to decode the next command. The tag will also clear the relative addressing mode memory, including the MARKED state and the previous ping memory.

### 7.1.1.3 State A

While a tag is in state A, it will respond to all commands except PingIDB and ScrollIDB. A tag will enter into state A upon receipt of a valid QuietB command.

### 7.1.1.4 State B

While a tag is in state B, it will respond to all commands except PingIDA and ScrollIDA. A tag will enter into state B upon receipt of a valid QuietA command A tag will remain in state B for a minimum of 20 seconds, even with loss of power. If the persistent state memory for state B is lost, the tag will power up in state A, or optionally a state where it will respond to all ping and scroll commands.

### 7.1.1.5 DEAD

The Dead State is a permanent state entered on receipt of a valid Kill Command and Destruct Code sequence. In the Dead State, the tag will not ever backscatter to a Reader again.

### 7.1.2 Alternate Tri-State Configuration

In an alternative embodiment of the present invention, a tag may assume three different states. Upon power up it will enter into State A or B or C depending on the state of its persistent state memory.

### 7.1.2.1 State A

When a tag is in state A, the ground state, it will respond to any command, including PingIDA, PingIDB, PingIDC, ScrollIDA, ScrollIDB and ScrollIDC. Upon receipt of a valid QuietC command, a tag in state A will transition to state B. Upon receipt of a valid QuietB command, a tag in state A will transition to state C.

### 7.1.2.2 State B

When a tag is in state B, it will respond to A and B commands, including PingIDA, PingIDB, ScrollIDA and ScrollIDB. Upon receipt of a valid TalkB command, a tag in state B will transition to ground state A. Upon receipt of a valid QuietB command, a tag in state B will transition to state C.

### 7.1.2.3 State C

When a tag is in state C, it will respond to B and C commands, including PingIDB, PingIDC, ScrollIDB and ScrollIDC. Upon receipt of a valid TalkC command, a tag in state C will transition to ground state A. Upon receipt of a valid QuietC command, a tag in state C will transition to state B.

### 7.2 General Command Format

The General Command Format is designed around the notion that to support very low cost (VLC) Tags, the Reader will have to perform extra work, allowing the Tags to be as simple and inexpensive as possible. This work falls largely into two areas, dealing with timing uncertainty and dealing with limited "long term" memory in the Tags. It is anticipated that Class **III** and higher Tags (battery powered devices with large memories) will support the Basic Command Format for backward compatibility reasons. Class III and higher Tags may also have a more sophisticated command format to be outlined in later documents that takes advantage of their enhanced capabilities.

VLC, single-chip Tags are expected to have limited oscillator stability, as quartz crystals are cost and size prohibitive. The Tags use the bit timing of commands to synchronize their internal clock, and may need to be powered up and see one full command packet before they can start decoding further commands. Replies from the Tags are structured such that the Reader can interpret the information transmitted by the Tags at whatever clock rate the Tag is able to provide. This scheme is similar in concept to auto-synchronization schemes used in magnetic card or barcode Readers.

Three classes of commands are provided:
● Basic Commands, to provide object identification, sorting, inventory, etc.
● programming commands that support Tag data initialization and programming by the Tag manufacturers prior to tagged items entering the supply chain
● Data link commands which provide a data link layer for class 2 and higher tags.

### 7.3 Reader Command Structure - (Reader to Tag Communication)

The format of a Basic Command from the Reader to the Tag is composed of seven (7) fields.

### 7.3.1 Basic Command Structure

[PREAMBL][ADDRMODE][CMD][PTR][LEN][MODULATION][VALUE]

**Table T.7, Command structure**

| ***name*** | ***Number of bits*** | ***meaning*** |
|---|---|---|
| **[PREAMBL]** | 2 | "01" |
| **[ADDRMODE]** | 4 | As defined below |
| **[CMD]** | 8 | command |
| **[PTR]** | 8/16 | Pointer |
| **[LEN]** | 8/16 | Length of data |
| **[MODULATION ]** | 1 | 0:FM0, 1:F2F |
| **[VALUE]** | [LEN] | Data |

### 7.3.2 Transmission Order

The Reader transmits the PREAMBL field first, and the [VALUE] field is transmitted last. Within each field, the lsb is transmitted first.

Address mode 2 uses 8 bit fields, address mode 3 uses 16 bit fields, and address modes 8-15 specify relative addressing, referring to the last ping command, as specified below. Address modes 0 and 1 set [PTR] to zero (pointing at ROOT).

**Table T.8, Address mode definitions**

| ***Address & node & Name*** | ***4-Bit Pattern Binary MSB <-LSB*** | ***PTR Field*** | ***LEN field*** | ***VALUE field*** |
|---|---|---|---|---|
| 0 Root, variable | 0000 | Absent | 8 bits | Bits to match [LEN]bits |
| 1 Root 24 | 0001 | Absent | Absent | 24 bits to match |
| 2 Pointer, 8 bit | 0010 | 8 bit | 8 bits | Bits to match [LEN]bits |
| 3 Pointer, 16 bit (Class 2 and 3) | 0011 | 16 bit | 16 bits | Bits to match [LEN]bits |
| 4 Reserved | 0100 | | | |
| 5 Reserved | 0101 | | | |
| 6 Marked 8 | 0110 | 8 bit | 8 bit | Data, [LEN] bits |
| 7 Marked 16 | 0111 | 16 bit | 16 bit | Data, [LEN] bits |
| 8 Last ping: in bin 0 | 1000 | Absent | Absent | Absent |
| 9 Last ping: in bin 1 | 1001 | Absent | Absent | Absent |
| 10 Last ping: in bin 2 | 1010 | Absent | Absent | Absent |
| 11 Last ping: in bin 3 | 1011 | Absent | Absent | Absent |
| 12 Last ping: in bin 4 | 1100 | Absent | Absent | Absent |
| 13 Last ping: in bin 5 | 1101 | Absent | Absent | Absent |
| 14 Last ping: in bin 6 | 1110 | Absent | Absent | Absent |
| 15 Last ping: in bin 7 | 1111 | Absent | Absent | Absent |

### 7.4 Addressing

All commands are addressed using same mechanism, as described in the addressing mode table. For addressing modes which return a value for [PTR] [LEN] and [VALUE], the tag will attempt to match the data in [VALUE] to its stored memory, starting at a distance [PTR] from ROOT, for [LEN] number of bits. The map into the identifier address space is determined by the ScrollID prefix and the capability code of the tag, but is required to start at root with a high entropy field which extends for at least 16 bits, preferably 24 or more bits. Typically ROOT will point at a fixed random number field (if one exists) followed by the CRC, the ePC, and the RECYCLECODE (if one exists). Higher addresses may contain addressable/physically searchable class 2 data, out of range temperature or sensor indicators, etc., depending on the capability code of the tag. Class 1 tags do not respond to commands using mode 3, the 16 bit addressing mode.

### 7.5 Command Encoding

Commands are encoded into two groups; Basic Commands and **Programming** Commands. Operation of each command is described in Sections 7.5.4 and 7.5.5, respectively.

### 7.5.1 Basic Command Encoding

**Table T.9, Basic Command Coding**

| **Basic Commands [CMD]** | **8-Bit Pattern Hex MSB <-LSB** | **8-Bit Pattern Binary MSB <-LSB** | **Reply from Tag (See Response Interval, Sec. 7.6)** |
|---|---|---|---|
| NULL | 0x00 | 0000 0000 | |
| SCROLLIDA | 0x01 | 0000 0001 | "ScrollID Reply" |
| SCROLLIDB | 0x21 | 0001 0001 | "ScrollID Reply" |
| QUIETA | 0x02 | 0000 0010 | "ScrollID prefix" |
| QUIETB | 0x12 | 0001 0010 | "ScrollID prefix" |
| PINGIDA | 0x04 | 0000 0100 | "PingID Reply" |
| PINGIDB | 0x14 | 0001 0100 | "PingID Reply" |
| SCROLLMFG | 0x07 | 0000 0111 | "MANUFACTURER VERSION REPLY" |
| SETMARKER | 0x16 | 0001 0110 | "ScrollID prefix" |
| WIPE | 0xFE | 1111 1110 | "ScrollID prefix" |
| KILL | 0xFF | 1111 1111 | "ScrollID prefix" |

### 7.5.2 Programming Command Encoding

The Basic Commands are extended by inclusion of the programming commands:

**Table T.10, Programming Command Coding**

| ***Programming Commands [CMD]*** | ***δ-Bit Pattern Hex MSB <- LSB*** | ***8-Bit Pattern Binary MSB <- LSB*** | ***Reply from Tag (See Response Interval, Sec. 7.6)*** |
|---|---|---|---|
| ERASEID | 0x21 | 0010 0001 | None |
| PROGRAMID | 0x22 | 0010 0010 | None |
| VERIFYID | 0x24 | 0010 0100 | "VerifyID Reply" |
| LOCKID | 0x28 | 0010 1000 | "ScrollID prefix" |

### 7.5.3 Class 2 Command Encoding

The Class 2 and above tags are extended by inclusion of the following commands:

**Table T.11, type 2 and 3 Command Coding**

| ***Programming Commands [CMD]*** | ***δ-Bit Pattern Hex MSB <- LSB*** | ***8-Bit Pattern Binary MSB <- LSB*** | ***Reply from Tag (See Response Interval, Sec. 7.6)*** |
|---|---|---|---|
| READ | 0x61 | 0110 0001 | Scroll data |
| WRITE | 0x68 | 0110 1000 | Tone |

### 7.5.4 Basic Commands - Overview

There are the eight Basic Commands, described briefly here and in more detail below:

### 7.5.4.1 ScrollIDA and ScrollIDB

Tags matching data sent by the Reader reply by sending back the SCROLLIDPREFIX from the table below, followed by the identification data in the tag starting at root. The only difference between ScrollIDA and ScrollIDB is that tags in state A will not respond to ScrollIDB, and tags in state B will not respond to ScrollIDA. Data sent by the Reader to the Tag may be of variable length. ScrollID can be used to look for specific tags or test for the presence of specific groups of tags in the field.

**Table T.12, ScrollID Prolog (8 bit, fixed code in mask set)**

| ***SCROLLIDPRETITY fields*** | ***SIZE (Bits)*** | ***MEANING*** |
|---|---|---|
| [RANLEN] | 2 | of the fixed random number at ROOT |
| | | 00: No hardware random number field |
| | | 01: 8 bit fixed random number |
| | | 10: 16 bin fixed random number |
| | | 11:reserved |
| [CRCLEN] | 2 | Length of the CRC field |
| | | 00: 16 bit |
| | | 01: 24 bit |
| | | 10: 32 bit |
| | | 11: reserved |
| [IDENTLEN] | 2 | Length of the ePC field |
| | | 00: 64 bits |
| | | 01: 96 bits |
| | | 10: 128 bits |
| | | 11: reserved |
| [RECYCLECODE] | 2 | Length of recycle field |
| | | 00: no recycle code field |
| | | 01: 16 bits |
| | | 10: 32 bits |
| | | 11: reserved |

### 7.5.4.2 SCROLLMFG

Tags matching data sent by the Reader reply by sending back an eight (8)-bit preamble, and the following data, which is never allowed to be programmable.

**Table T.13 SCROLLMFG reply**

| ***SCROLLMFG FIELD*** | ***SIZE*** | |
|---|---|---|
| PROLOG | 8 | Same as ScrollID preamble |
| CRC | 16 | |
| MANUFACTURER | 16 | Assigned by "authorizing agency" |
| CAPABILITY CODE | 16 | Assigned by "authorizing agency" |
| MEMORY SIZE | 16 | Capability code dependant meaning |
| MASK SET/PRODUCT CODE | 16 | Manufacturer defined |
| DIE NUMBER | 16 | Manufacturer defined |

### 7.5.4.3 PingIDA and PingIDB

These commands are used as part of a multi-Tag anti-collision algorithm described in detail below. The only difference between PingIDA and PingIDB is that tags in state A will not respond to PingIDB, and tags in state B will not respond to PingIDA. Tags matching data sent by the Reader respond with eight (8) bits of the Tag address, starting at a point designated, somewhat indirectly, by two parameters supplied by the Reader, and proceeding from there toward the MSB of the entire Tag address. Each Tag response is placed in one of eight (8) time bins delineated by clock ticks sent from the Reader. The three (3) least significant bits of the eight bits transmitted by the Tag determine the bin used.

### 7.5.4.4 QuietA and QuietB

The QuietA and QuietB commands are used to place tags into states where they will not interact further with an ongoing inventory, without impairing the ability to get them to respond to a subsequent inventory. QuietA puts the addressed tag or tags into state B, and Quiet B puts the addressed tag(s) into state A. The quieted tag will respond with the ScrollID preamble, enabling applications which maintain an inventory by simply quieting all tags previously known to be in the field, and using the presence or absence of a reply to update their inventory before executing a tree walking search.

### 7.5.4.5 SETMARKER

The SETMARKER command is an addressing command. The MARKED state is held in volatile memory and is cleared at power on reset, and also cleared by the use of any addressing mode other than the addressing mode MARKED. The SETMARKER command itself is addressed the same as other commands. Programming and class 2+ commands are divided into addressing (SETMARKER) and data exchange parts with a one bit volatile state to allow the tag communications hardware and registers used for addressing to be reused for reading and writing.

### 7.5.4.6 KILL

The Kill command can only be addressed by the MARKED address mode. Tags matching the kill code sent by the reader in the [VALUE] field are deactivated and will no longer respond to reader queries. This "destruct" command renders the Tag inactive forever. It is anticipated that the Kill command will require higher field strengths from the Reader, and therefore be a short-range operation. The Reader must transmit "1"s for 100 milliseconds, then 100 milliseconds of "0"s, followed by 15 "1"s and then another 100 milliseconds of "0"s after the kill code for the tag to complete the command. The KILL command is required to erase the CRC and ePC, and then permanently deactivate the tag.

### 7.5.4.7 WIPE

The WIPE command can only be addressed by the MARKED address mode. If a tag does not have a recycling field, the WIPE command will execute the same function as KILL. If it does have a recycling field, tags matching the kill code sent by the reader in the [VALUE] field will erase the CRC and ePC fields of the tag, but will not erase the recycling field. It is anticipated that the WIPE command will require higher field strengths from the Reader, and therefore be a short-range operation. The Reader must transmit "1"s for 100 milliseconds, then 100 milliseconds of "0"s, followed by 15 "1"s and then another 100 milliseconds of "0"s after the kill code for the tag to complete the command. The WIPE command is required to erase the CRC and ePC, and leaves the tag functional but not programmable. It is anticipated but not required that tags which implement the recycling feature will have a [RAND] hardware random number.

### 7.5.5 Programming Commands - Overview

Programming Commands use the same command structure and field definitions as the Basic Commands, but are issued only by a Tag programming device, or Programmer. A Tag Programmer may be similar to a Reader, with the exception that it can execute Programming Commands in addition to Basic Commands, in accordance with methods approved by Tag (and IC) manufacturers.

Programming Commands enable programming of the contents of the Tag memory, and verification of the contents of the Tag memory prior to locking the contents

All Programming Commands are disabled once the Tag manufacturer has locked the Tag data contents. The specific timings for programming a Tag are memory technology dependent

### 7.5.5.1 VerifyID

The VerifyID command is used to examine the contents of memory as part of a programming cycle in order to allow a manufacturer's Tag programmer to verify that all memory has been programmed correctly into the Tag. The VerifyID command will not execute on Tags that have been LOCKED.

The VerifyID command will address all bits of Tag memory, and the Tag will transmit the entire contents of the ID memory, including the kill code, to the programmer in a manner similar to the ScrollID Reply (refer to Section 7.6). The number of bits transmitted and the interpretation of the reply is dependent upon Tag Class, Type specific lock function implementation.

### 7.5.5.2 EraseID

The EraseID command sets all bits of the Tag to the value "0". This command is a bulk erase of the entire memory array. The EraseID operation is required prior to the ProgramID command. The EraseID command may not be executed on Tags that have been LOCKED.

The EraseID command is only addressed by the MARKED addressing mode.

The Programmer must send "0"'s after the [EOF] for the duration of the erase time, Tₑᵣₐₛₑ. The EraseID operation is terminated on receipt of a "1" from the Programmer. The Tag will complete an orderly shutdown of the programming of the Tag within 8 * T₀ intervals, and await the next transaction from the reader.

Upon receipt of a valid EraseID Command the Tag will execute the appropriate internal timing sequences required to erase memory.

### 7.5.5.3 ProgramID

The Tag programming is accomplished 16 bits at a time. **Programming** is only allowed if the Tag has not been previously locked.

The tag may be addressed only by the MARKED addressing mode.

The data is sent to the Tag using the ProgramID Command, where the [PTR] filed is the memory row address to be programmed and the [VAL] field contains the 16 bits of data to be programmed into the selected memory row address.

The [PTR] field must be set to the indicated decimal/binary value to indicate to the Tag the row to be programmed:

**Table T.14, Programming Row Selection, Class 1 Tag**

| ***[PTR] Value Decimal*** | ***[PTR] Value Binary msb lsb*** | ***Row to be Programmed*** |
|---|---|---|
| 0 | 00000000 | Row 1, bits 1-16 |
| 16 | 00010000 | Row 2, bits 17-32 |
| 32 | 00100000 | Row 3, bits 33-48 |
| 48 | 00110000 | Row 4, bits 49-64 |
| 64 | 01000000 | Row 5, bits 65-80 |
| 80 | 01010000 | Row 6, bits 81-96 |
| 96 | 01100000 | Row 7, bits 97-112 |
| 112 | 01110000 | Row 8, bits 112-125 |

The [LEN] field must be 16 decimal, binary 00010000, indicating that 16 bits are to be programmed.

Upon receipt of a valid ProgramID Command the Tag will execute the appropriate internal timing sequences required to program memory.

### 7.5.5.4 LockID

The LockID command is required to be issued to lock the identification (CRC and ePC) portions of a tag's memory before it leaves a controlled supply channel. The PTR field should be set to all 1's. The use of the MARKED addressing mode is required.

### 7.5.5.5 EraseID, ProgramID and LockID Timing

The time duration required to erase, lock or program a Tag is manufacturer and technology dependent. The Tag manufacturer may enable others to initialize and program Tags, and will provide the value of Tₑᵣₐₛₑ T_{lock} T_{program-}

### 7.5.5.6 EraseID and ProgramID Reader Signaling

The reader to Tag signaling is the similar to the basic command signaling. The Programmer must send "0"'s after the [EOF] for the duration of the program or erase time, T_{pgm or} Tₑᵣₐₛₑ.

Figure A.25 shows a graphical representation of the signaling.

### - Drawing Omitted -

### 7.5.6 Class 2 and higher commands - Overview

Class 2 and higher tags use the same singulation method and identification method as the class 1 tags. In addition, they may have additional read/write memory, security features, sensors, etc. Class two tags may also have a battery to realize sensor logging, for example.

Class three and above tags are defined to have battery assisted communications. Class three and above tags will respond to class 1 commands in a low power passive mode, or at longer ranges they use a key transmission to go to the battery assist communications mode. The wakeup key for class three and above tags is described in a separate section. This allow them to avoid using their battery assist except for long range exchanges which are specifically directed at them, reducing the use of battery power. It is anticipated that F2F communications will be required for communication at long range.

Communications with class 2 and above tags are standardized into a handle based I/O data link. Handles are issued by "authorizing agency" for a specific purpose, and together with the SCROLLMFG information, can be used to deduce and exercise the capabilities of a tag. A few example capability codes and corresponding handles:

**Table T.15, Example (only) capability codes and handles**

| Capability Code | Handles | Read | Write |
|---|---|---|---|
| 00XXXXXXXXXXXX XX | Handles and | capabilities by look up table | |
| 01XXXXXXXXXXXX XX | Handles and capabi ilities by subfields | | |
| 01XXXXXXXXXX000 0 | No memory | | |
| 01XXXXXXXXXX000 1 Bit wide memory | 0-32768 memory address in bits | Read LEN bits starting at given address | Write LEN bits at given address |
| 01XXXXXXXXXX001 0 Byte wide memory | 0-32768 Memory addresses in bytes | Read LEN Bits starting at given address | Write LEN bits at given address |
| 01XXXXXXXXX1XX XX | 1-32768 Memory addresses | Read LEN Bits starting at given address | Write address and LEN data bits to scratch pad |
| Scratchpad type Memory | 69150 | Verify scratchpad data and address | |
| | 69251 | | Write scratch pad to memory |
| 01XXXXXX000XXXX X | No security | | |
| 01XXXXXX001XXXX X Key exchange security | 32769 | | Write security token, LEN bits long |
| | 32770 | Read security token | |
| 01XXXX00XXXXXXX X | No temperatures | | |
| 01XXXX01XXXXXXX X | 32771: interval | Set interval in seconds | Read current interval |
| | 32772 | Set number of temperatures to read at a time | N/A |
| Temperature interval recorder | 32773 | Read temps, VALUE intervals into past | N/A |

### 7.5.6.1 READ

The READ command is the basic command for fetching data from the class 2 or higher tag. It is addressed only by the MARKED addressing mode, and uses a 16 bit PTR field which is a read address or handle, and a LEN field which is the number ofbits to read, or is used as a second parameter whose meanings are to be determined by the handle.

### 7.5.6.2 WRITE

The WRITE command is the basic command for writing data to the class 2 or higher tag. It is addressed only by the MARKED addressing mode, and uses a 16 bit PTR field which is a read address or handle, a 16 bit LEN, and a variable length data field whose length is determined by the [LEN] parameter.

### 7.6 Response Interval -(Tag to Reader Communication)

In response to the scroll and ping commands in addressing modes 0,1,2 or 3, Tags respond if they are in the appropriate state, A or B, and the data sent by the Reader in the [VALUE] field matches against the Tag's internal memory starting at the location specified by the [PTR] fiend Data in the [VALUE] field is compared to Tag memory, from the lower Tag memory address to the higher Tag memory address Tags that match all of the bits in the [VALUE] field will reply in one of two ways: A "ScrollID Reply" or a "PingID Reply".

While the criteria for whether a Tag responds to a command is the same for the ping and scroll commands, the response pattern issued from the Tag is not. These differences are outlined below.

### 7.6.1 Example ScrollIDA Command

If a Reader issues a command with the following data:

| | | |
|---|---|---|
| [CMD] = | 00000001 | (ScrollIDA) |
| [ADDRMODE]= | 0010 | |
| [PTR] = | 00000111 | (7) |
| [LEN] = | 00001001 | (9) |
| [VALUE] = | 000101101 | (45) |

Tags that are in state A would attempt to match nine (9) bits of their address data, starting at bit seven (7) against the data specified in the [VALUE] field. (This matching exercise starts at bit seven (7) and works up in memory.) Tags that successfully match will respond with a ScrollID Reply.

In the Table T.16 below, Tags 1 and 3 would respond to the command but Tag 2 would not. Underlined bits in Tag memory are compared with the [VALUE] data. In this case, bits seven (7) through bit fifteen (15) are compared.

**Table T.16, Example of ScrollID Operation**

| | ***Tag ID Code*/*Bit Number*** | ***Tag will Respond to ScrollID Command*** |
|---|---|---|
| | **MSB (Bit N) LSB (Bit 0)** | |
| Bit Number | ...321098765432109876543210 | |
| Tag 1 ID | ...010001000001011011101010 | YES |
| Tag 2 ID | ...1001111000010*0*1010010010 | NO (bit 10 fails to match) |
| Tag 3 ID | ...101101010001011011110111 | YES |

### 7.6.2 ScrollID Reply

Tags that respond to a ScrollIDA or ScrollIDB command reply by modulating an eight bit preamble followed by the entire identification code. For Class I Tags, the sixteen (16) bit CRC would be followed by ninety-six (96) bits of unique ID data for a total of one hundred and twenty (120) bits. Tags start by modulating from the lowest memory address to the highest memory address.

Tag ScrollID Reply Structure:

### - Drawing Omitted -

### 7.6.3 Example PingIDB Command

If a Reader issues a command with the following data:

| | | |
|---|---|---|
| [CMD] = | 00010100 | (PingIDB) |
| [ADDRMODE]= | 0010 | (2) |
| (PTR] = | 00000111 | (7) |
| [LEN] = | 00001001 | (9) |
| [VALUE] = | 000101101 | (45) |

Tags which are in state B would attempt to match nine (9) bits of their address data, starting at bit seven (7) against the data specified in the [VALUE] field. (This matching exercise starts at bit seven (7) and works up in memory.) The three bits of Tag memory immediately above the matched portion determine which bin the Tag responds in.

In the example table below, underlined bits in Tag ID Code are compared with [VALUE] data sent by the Reader. (In this case, bits seven (7) through fifteen (15) are compared.) Italic Bits are modulated back to the Reader during one of the reply bins. The lowest three (3) bits of the response determine the response bin number.

**Table T.17, Example of PingID Operation**

| | ***Tag ID Code*/*Bit Position*** | ***Tag will Respond to PingIDB Command*** | ***Bin for Response*** | ***8-Bit Response*** |
|---|---|---|---|---|
| | **MSB (Bit N) LSB (Bit 0)** | | | **MSB LSB** |
| Bit Number | ...321098765432109876543210 | - | - | - |
| Tag 1 ID | ...*01000100*0001011011101010 | YES | Bin 4 (100) | 01000100 |
| Tag 2 ID | ... 1001111000010*0*1010010010 | NO (bit 10 does not match) | - | - |
| Tag 3 ID | ...*11110101*0001011011110110 | YES | Bin 5 (101) | 11110101 |
| Tag 4 ID | ...*10110000*0001011011110111 | YES | Bin 0 (000) | 10110000 |

### - Drawing Omitted -

### 7.6.4 PingID Reply

The PingID command is used extensively in the anti-collision algorithm described below. This command requires that Tags matching data sent by the reader reply by modulating eight (8) bits of data in one of eight (8) time intervals delineated by modulations (or "Ticks") from the Reader after a Setup interval.

The three bits of Tag memory directly above the matched data determine the particular response interval for a Tag reply. Tags with the next three bits higher of '000' respond in the first interval, Tags with the next three bits higher of '001' reply in the second interval and so on out to '111' in the eighth interval. These intervals are preferred to as "bins", numbered zero (0) through seven (7).

### - Drawing Omitted -

### 7.6.5 Example QuietB Command

If a Reader issues a command with the following data:

| | | |
|---|---|---|
| [CMD] = | 00010010 | (QuietB) |
| [ADDRMODE]= | 00000010 | (2) |
| [PTR] = | 00000111 | (7) |
| [LEN] = | 00001001 | (9) |
| [VALUE] = | 000101101 | (45) |

Tags which are in state A or B would attempt to match nine (9) bits of their address data, starting at position seven (7) against the data specified in the VALUE field, starting at the LSB and working up. Tags that match the Quiet Command arguments will enter and remain in state A.

Underlined Bits in Tag ID Code are compared with [VALUE] data sent by the Reader. (In this case, bits seven (7) through fifteen (15) are compared.)

**Table T.18, Example of QuietB Operation**

| | ***Tag ID Code*/*Bit Position*** | ***Tag will Execute QuietB Command and go to State A*** |
|---|---|---|
| | **MSB (Bit N) LSB (Bit 0)** | |
| Bit Number | ...321098765432109876543210 | |
| Tag 1 ID | ...010001000001011011101010 | YES |
| Tag 2 ID | ...1001111000010*0*1010010010 | NO (bit 10 does not match) |
| Tag 3 ID | ...101101010001011011110110 ^{.} | YES |
| Tag 4 ID | ...101100000001011011111011 | YES |

The Reader, after issuing the Quiet Command, must transmit CW for the minimum bin time during which the tag will backscatter a ScrollID preamble, after which, the Reader may start a new transaction. See Figure A.29.

### - Drawing Omitted -

### 7.6.6 Example QUIETA Command

If a Reader issues a command with the following data:

| | | |
|---|---|---|
| [CMD] = | 00000010 | (QUIETA) |
| [ADDRMODE]= | 0010 | (2) |
| [PTR]= | 00000111 | (7) |
| [LEN] = | 00001001 | (9) |
| [VALUE] = | 000101101 | (45) |

Tags would attempt to match nine (9) bits of their address data, starting at position seven (7) against the data specified in the [VALUE] field, starting at the LSB and working up.. Those matching will into state B.

Underlined Bits in Tag ID Code are compared with [VALUE] data sent by the Reader. (Again, Bits seven (7) to fifteen (15) are compared.)

**Table T.19, Example of QuietA Operation**

| | ***Tag ID Code*/*Bit Position*** | ***Tag will Execute QuietA Command and Enter The B State*** |
|---|---|---|
| | **MSB (Bit N) LSB (Bit 0)** | |
| Bit Number | ...321098765432109876543210 | - |
| Tag 1 ID | ...010001000001011011101010 | YES |
| Tag 2 ID | ...1001111000010*0*1010010010 | NO (bit 10 does not match) |
| Tag 3 ID | ...101101010001011011110110 | YES |
| Tag 4 ID | ...101100000001011011110111 | YES |

### 7.6.6 Example QUIETA Command

If a Reader issues a command with the following data:

| | | |
|---|---|---|
| [CMD] = | 00000010 | (QUIET) |
| [ADDRMODE]= | 0010 | (2) |
| [PTR]= | 00000111 | (7) |
| [LEN] = | 00001001 | (9) |
| [VALUE] = | 000101101 | (45) |

Tags would attempt to match nine (9) bits of their address data, starting at position seven (7) against the data specified in the [VALUE] field, starting at the LSB and working up. Those matching will into state B.

Underlined Bits in Tag ID Code are compared with [VALUE] data sent by the Reader. (Again, Bits seven (7) to fifteen (15) are compared.)

**Table T.19, Example of QuietA Operation**

| | ***Tag ID Code*/*Bit Position*** | ***Tag will Execute QuietA Command and Enter The B State*** |
|---|---|---|
| | **MSB (Bit N) LSB (Bit 0)** | |
| Bit Number | ...321098765432109876543210 | - |
| Tag 1 ID | ...010001000001011011101010 | YES |
| Tag 2 ID | ...1001111000010*0*1010010010 | NO (bit 10 does not match) |
| Tag 3 ID | ...101101010001011011110110 | YES |
| Tag 4 ID | ...101100000001011011110111 | YES |

### 7.8 Protocol Examples

Below are a number of examples of how these commands can be used for Class la Devices.

### 7.8.1 Multiple Tags: Random Addresses

In this example, a field of four (4) Class Ia Tags are presented to the Reader. PingIDA commands are used to isolate the Tags, ScrollIDA commands are used to read and verify.

Command 1: PingIDA, [PTR]=0, [LEN]=1; [VALUE]=0.

Underlined Bits are compared. (Bit zero (0)) Italic Bits are sent to Reader.

**Table T.20, Scenario 2 Example**

| | ***Tag ID Code*/*Bit Position*** |
|---|---|
| | **MSB (Bit N) LSB (Bit 0)** |
| Bit Position | ...321098765432109876543210 |
| Tag 1 | ...010001000001011*01110301*0 |
| Tag 2 | ...100111100001001*01001000*0 |
| Tag 3 | ...101101010001001*01111011*0 |
| Tag 4 | ...101100000111011*01101011*0 |

In this case, all Tags match the [VALUE] data and will reply.

**Reply 1:**

**Table T.21, Scenario 2 PingID Reply 1**

| ***Reply Bin*** | **0** | **1** | **2** | **3** | **4** | **5** | **6** | **7** |
|---|---|---|---|---|---|---|---|---|
| ***Bin Value*** | **000** | **001** | **010** | **011** | **100** | **101** | **110** | **111** |
| Contention Observed | NO | - | - | YES | - | NO | - | - |
| Tag 1 Response | | | | | | 01110101 | | |
| Tag 2 Response | 0100100 0 | | | | | | | |
| Tag 3 Response | | | | 01111011 | | | | |
| Tag 4 Response | | | | 01101011 | | | | |

### Reader notes isolated Tags in Bin 0 and Bin 5, contention in Bin 3.

Command 2: ScrollIDA, [ADDRMODE]=8 Reply 2: Tag 2 matches ScrollID criteria. Tag 2 sends identification data (CRC and ePC)

Command 3: ScrollIDA, [ADDRMODE]=13 Reply 3: Tag 1 matches ScrollID criteria. Tag 1 sends identification data (CRC and ePC)

Command 4: PingIDA, [ADDRMODE]=0, [LEN]=4, [VALUE]=0110.

Underlined Bits (zero (0) through three (3)) are compared. Italic Bits are sent to Reader.

**Table T.22, Scenario 2 PingID Command 4**

| | ***Tag ID Code*/*Bit Position*** |
|---|---|
| | **MSB (Bit N) LSB (Bit 0)** |
| Bit Position | ...321098765432109876543210 |
| Tag 1 | ...010001000001011011101010 |
| Tag 2 | ...100111100001001010010000 |
| Tag 3 | ...101101010001*00101111*0110 |
| Tag 4 | ...101100000111*01101101*0110 |

In this case, Tags 3 and Tag 4 match the [VALUE] data and will modulate. Tags one (1) and two (2) do not match so they will not modulate during the reply interval.

**Reply 4:**

**Table T.23, Scenario 2 PingID Command Reply 4**

| ***Reply Bin*** | **0** | **1** | **2** | **3** | **4** | **5** | **6** | **7** |
|---|---|---|---|---|---|---|---|---|
| ***Bin Value*** | **000** | **001** | **010** | **011** | **100** | **101** | **110** | **111** |
| Contention Observed | - | - | - | - | - | NO | - | NO |
| Tag 1 Response | | | | | | | | |
| Tag 2 Response | | | | | | | | |
| Tag 3 Response | | | | | | | | 00101111 |
| Tag 4 Response | | | | | | 01101101 | | |

### Reader notes isolated Tags in Bin 5 and Bin 7

Command 5: ScrollIDA, [ADDRMODE]=13, Reply 5: Tag 4 matches ScrollIDA criteria. Tag 4 sends identification data (CRC and ePC)

Command 6: ScrollIDA, [ADDRMODE]=15,

Reply 6: Tag 3 matches ScrollIDA criteria. Tag 3 sends identification data (CRC and ePC)

Following the ScrollIDA commands, the Reader issues a QuietA command to the Tags just read. Doing this ensures that no Tags were remaining at the end of the search that were in some way masked by the presence of Tags with a stronger modulation signal. After the last Quiet command, the Reader can issue another sequence of PingID and/or ScrollID Commands to probes the entire field in order to look for Tags that may have yet been identified. At this point the anti-collision algorithm is complete.

### 7.8.2 Use of two-State symmetry

This section describes the use of the two-state symmetry of the protocol, and describes its advantages over a ready-quiet alternative. It will be shown that the symmetric version effectively has *less* state dependence by symmetrizing the quiet-ready states into two symmetrical halves, the State A and State B of the protocol.

The symmetry described in this specification will substantially increase the performance over ready-quiet protocols in cases where tags have been inventoried and put into the quiet state, and it is desired to inventory them again, either from a different reader station, or as part of a continuous inventory to monitor tags being removed on a timely basis.

In the case of a ready-quiet protocol, the tags, once placed in the quiet state, must be touched by a talk command before they can participate in an inventory. Several talk commands can be issued before an inventory, but there is no guarantee that multipath will be favourable, the frequency right, or even that the tag is physically close enough to the reader at that point in time. By eliminating the need to see a talk command, a tag can be counted during a single "lucky" time or position, extending the effective reliable range of the protocol.

The use of a time out for a persistent quiet is a potential simpler alternative, but the manufacture of a tag which has a tightly controlled persistence time is difficult. Also, for example, 10 seconds might be too short a time to inventory a large number of tags, and may yet 30 seconds might be long enough to interfere with multiple readers tracking an item on a trajectory or catching a shoplifter in the act of destroying a tag or putting the item into a shielded bag and walking away with an item.

The recommended implementation of the tag is to supply a persistent node which maintain its state for at least twenty seconds even in the absence of power. Assuming that the persistent node decays to the zero (0) state, [0] would encode state A, and [1] will encode state B. State B expires with time into the state A. There is no upper bound on the time that state B persists, but it is not permitted to be in states where it is randomly powering up into state A or state B. The suggested implementation is to write the persistent node with 0 upon reading a 0. An alternative preferred implementation is to have two separate persistent nodes for state A and state B, always clearing one when setting the other. In this case, when both nodes have expired, the tag should respond to all commands of either the A or B flavour.

The command set for sorting includes PingIDA, PingIDB, ScrollIDA, ScrollIDA, QuietA and QuietB, with the A and B flavours of the commands behaving the same except that the tags would respond to the PingIDA and ScrollIDA commands only if they are in state A, and the tags would respond to the PingIDB and ScrollIDB commands only if they are in state B. The QuietA command takes addressed tags which are in state A into the B state, and QuietB takes addressed tags which are in state B into State A.

Readers would start by doing an inventory as described in the previous section, using PingIDA, ScrollIDA, and QuietA. After no further tags are responding, the reader would continue to do high level PingIDA commands to explore any uncounted tags. Note that a tag in state A would be counted even if it were only powered for a brief time, just long enough to see a command to sync its clock, the PingIDA, a ScrollIDA, and a QuietA. At this point all tags which have been inventoried will be in state B. After a predetermined amount of time, a new inventory would be done, in the same way, using PingIDA, ScrollIDA, and QuietA again. Note that there is no need to do any separate talk or wake commands, as all tags that are powered at that moment have been placed into state B. already. After this inventory, all inventoried tags will be in the state B, and the reader can continue to do high level PingIDA commands for a while. Then a PingIDB, ScrollIDB, and QuietB inventory would start again, again with no need for talk commands.

Any tag that is continuously in the field is counted in every inventory, both the PingIDA and PingIDB flavours. Any tag that enters the field will be counted, in worst case, in the second inventory after it enters the field, the same worst case time as if a ready-quiet protocol was used, even if a talk command at the beginning of each inventory was guaranteed to be received in the quiet-talk type protocol.

From customer testing, it is apparent that the persistent quiet capability of the latest prototype tags makes a very important contribution to the capabilities of the RFID system, specifically consistency in counting tags near the edge of range when tags are moving through the reader field. For tags at the edge of range, as the frequencies are changed and multipath interference changes as the tag or other objects are moved in the reader field, the power available fluctuates and may only be sufficient to power the tag for brief periods of time. Persistent sleep allows the majority of tags to be counted quickly and for high level pings to be generated over and over again, seeking out tags which are only intermittently powered. The symmetrical commands extend this comprehensive counting capability to tags have just been inventoried and put into the quiet state, or as part of a continuous inventory process.

The main advantage of this approach is that it prevents the tags from ever entering a state where they are hard to count, which they are in the quiet state of a ready-quiet protocol. At first glance, it may seem that the quiet state is not hard to get out of, because a talk command can be used. However, if a tag is unknown to the reader, only a high level talk command will potentially wake it up, and a high level talk command would wake up all the other tags as well. It may seem that if a tag is in a quiet state, it must have been recently inventoried anyway, but if a different reader station did that inventory, or if a continuous inventory is desired, then it needs to be inventoried again. If a tag is in the quiet state in a ready-quiet protocol, it must be touched twice, at two widely separated times and possibly two frequencies. It needs to be active once when the whole field of tags is awakened, and then again later when that particular tag is to be inventoried. Needing two events to happen greatly impacts the probability of counting tags which are on the margin and are only intermittently powered, and that is avoided by using the symmetric protocol. The time savings of not requiring additional talk commands to be issued is a small side benefit

### 8 APPLICATION LAYER

### 8.1 Overview

The Tag and Reader detailed under this specification are envisioned as part of a hierarchical, network-based, information management system for inventory control, asset management and real-time tracking of items throughout the supply chain.

Information gathered and tracked will be routed in a number of ways: Readers communicating with Tags will transmit ID codes and other data either on demand, where a networked Service requests information from the Reader, or in an event-driven way, where the Reader initiates the transaction and provides information to the System as it appears. Readers will use both wired and eventually wireless infrastructure for the transmission of this information.

The vision is for information about individual items to be accessible in near real-time from virtually any location.

For this vision to obtained, both Readers and Tags must be ubiquitous. In addition, Readers will need to support connectivity with Enterprise data systems. --A new Reader, entering a retail environment or a node in the supply chain, will have to be able to register itself with the network, advertise its capabilities, stream data to central repositories and also defend itself from unauthorized access to its information.

Ubiquity requires an open standard. Standards are needed for both how information is contained in Tags and for how it moves out from the Reader. Auto-ID Center members are actively pursuing development in both of these areas. Information contained in Tags will be managed in through the use of ePCs (Electronic Product Codes) analogous to the widely used Universal Product Code (UPC). By standardizing tag capabilities by using the handle concept, implementation of features such as extended memory, security, and temperature measurements, and a wide range of products will be able to be mixed and matched from different manufacturers.

### 8.2 Electronic Product Code (ePC)

The Electronic Product Code (ePC) is a numbering scheme that can provide unique identification for physical objects, assemblies and systems. Information is not stored directly within the code - rather, the code serves as a reference for networked (or Internet-based) information. In other words, the code is an "address" - it tells a computer where it should go to find information on a network information management system.

Each of the Class I Tags described in this document will carry a unique 64-bit or 96-bit ID code. These codes carry a structure that identifies manufacturer, the class of the object the Tag is attached to, and a unique serial number. With this unique identifier as a key, a supply chain management system can query a local or remote database to gain access to detailed information about the properties and history of a particular item. In Class II and higher Tags, the ePC data may be followed by other information that can be written into the Tag as it moves throughout the supply chain, in essence carrying a portion of this database along with the item.

The for example, the 96 bit version of the ePC is comprised of four fields as follows:

### - Drawing Omitted -

The ePC code layout in Figure A.34 represents information flow and not necessarily a direct mapping to Tag memory locations.

Other versions of the ePC are documented separately in Auto-ID Center publications identified in Section 3.2.

Three 64-bit versions, or Types, follow the same general structure, with a Header, ePC manager, Object Class and Serial Number data fields. Each type varies the sizes of each field. The Header bits specify which of the three 64-bit mappings a Tag encoded with.

**Table T.24, Bit Mapping for 64-Bit ePC**

| 64-Bit | ***Number of Bits*** | | | | |
|---|---|---|---|---|---|
| Address Type | Header | Manager | Object Class | Serial Number | Total |
| I | 2 | 21 | 17 | 24 | 64 |
| II | 2 | 15 | 13 | 34 | 64 |
| III | 2 | 26 | 13 | 23 | 64 |

Since each addressing scheme, 64-bits (types I, II and III), 96-bits and higher, has a different value for the header, every ePC variant can be read and interpreted correctly by an information management system. This scheme permits seamless integration of Tags with different numbers of address bits into the system.

### 8.3 Reader Connectivity

Network connectivity is a central feature of next-generation Readers. A number of emerging technologies are being explored that could be used to dynamically assemble large numbers of Readers into an intelligent network. Examples include: Microsoft's Universal Plug and Play (UpnP), Sun Microsystems' Jini, and Service Location Provider (SLP). A common thread running through these efforts is the notion of network "plug and play" - where a network device (a Reader or other Internet Appliance) can configure itself on start-up, register its capabilities with interested software entities and discover the resources it needs to function in a system with minimal intervention by the user.

In the supply chain, Readers will operate in at least two modes to track items: On Demand, and Autonomously. In On Demand mode, a software entity would communicate with the Reader over the network and request that the Reader take an inventory of the items in range. Autonomous Readers would continuously monitor their area for Tags, or changes to the Tag field. In both cases Tag data would then be sent from the Reader across a LAN or the Internet to data management software that ties ID codes to product tracking information.

## Claims

1. A method for identifying tags, the method being **characterized by**:
issuing a first set of commands to identify a first plurality of tags in a first state (1407), wherein, as a result of identifying the first plurality of tags in the first state, the first plurality of tags which are identified in the first state are placed in a second state (1412); and
issuing a second set of commands, to identify a second plurality of tags in the second state (1416), wherein, as a result of identifying the second plurality of tags in the second state, the second plurality of tags which are identified in the second state are placed in the first state (1421),
wherein the first state and the second state are symmetrical states,
and wherein the tags in the first state do not respond to the second set of commands, and the tags in the second state do not respond to the first set of commands.

2. The method as in claim 1 wherein issuing the first set of commands and issuing the second set of commands, are performed without requiring an interrogator know that the interrogator has placed certain tags in the first state or the second state.

3. The method as in claim 1 wherein the first set of commands is for the first plurality of tags in the first state from a population of tags.

4. The method as in claim 3 wherein the second set of commands is for the second plurality of tags in the second state from the population of tags.

5. The method as in claim 4 wherein the second plurality of tags includes tags from the first plurality of tags that have been placed from the first state into the second state.

6. The method as in claim 1 wherein the first plurality of tags of a population of tags are assigned to a first session.

7. The method as in claim 6 further comprising:
issuing a third set of commands to identify a third plurality of tags in a first state, wherein, as a result of identifying the third plurality of tags, the first state is inverted to the second state.

8. The method as in claim 1 wherein issuing the first set of commands is for a first session and issuing the second set of commands is for a second session, and wherein the state of the first plurality of tags for the first session is independent of the state of the second plurality of tags for the second session.

9. The method as in claim 8 wherein the first plurality of tags includes tags from the second plurality of tags.

10. The method as in claim 1 wherein the first plurality of tags are passive backscatter tags.

11. The method as in claim 10 wherein the first state is persistent with intermittent power.

12. The method as in claim 1 wherein each of the first plurality of tags includes an inventory state bit for a first session and a second inventory state bit for a second session.

13. The method as in claim 1 wherein issuing a first set of commands is by a handheld reader.

14. The method as in claim 1 wherein issuing a first set of commands is by a frequency hopping reader.

15. The method as in claim 1 wherein issuing the first set of commands in a first session is by a first reader, and wherein issuing the second set of commands in a second session is by a second reader.

16. The method as in claim 15 wherein the first reader and the second reader are assembled into a network.

17. The method as in claim 1 wherein the identifying the first plurality of tags in the first state uses a pseudorandom number pre-acknowledgement.

18. The method as in claim 1 wherein the first plurality of tags are semi-passive backscatter tags.

19. The method as in claim 1 wherein the first plurality of tags are active tags.

20. An apparatus (12) for identifying tags, the apparatus being **characterized by**:
means for issuing a first set of commands to identify a first plurality of tags in a first state (1407) and to place the first plurality of tags, which are identified in the first state, in a second state (1416); and
means for issuing a second set of commands to identify a second plurality of tags in the second state (1416) and to place the second plurality of tags, which are identified in the second state, in the first state (1421),
wherein at least one of the first set of commands contains a first parameter indicating the first state, wherein at least one of the first set of commands containing a first parameter indicating the first state causes the first plurality of tags to perform an operation that is identical to the operation performed by the second plurality of tags in response to at least one of the second set of commands that contains a second parameter indicating the second state
wherein the first state and the second state are not the same states,
and wherein the first set of commands is different from the second set of commands in that the tags in the first state do not respond to the second set of commands, and the tags in the second state do not respond to the first set of commands.

21. The apparatus as in claim 20 wherein issuing the first set of commands and issuing the second set of commands are performed by the apparatus without requiring the apparatus to know that certain tags are placed in the first state or the second state.

22. The apparatus as in claim 20 wherein the first set of commands is for the first plurality of tags in the first state from a population of tags.

23. The apparatus as in claim 22 wherein the second set of commands is for the second plurality of tags in the second state from the population of tags.

24. The apparatus as in claim 23 wherein the second plurality of tags includes tags from the first plurality of tags that have been placed from the first state into the second state.

25. The apparatus as in claim 20 wherein the first plurality of tags of a population of tags are assigned to a first session run by the apparatus.

26. The apparatus as in claim 25 further comprising:
means for issuing a third set of commands to identify a third plurality of tags in a first state, wherein, as a result of identifying the third plurality of tags, the first state is inverted to the second state.

27. The apparatus as in claim 20 wherein issuing the first set of commands is for a first session and issuing the second set of commands is for a second session, and wherein the state of the first plurality of tags for the first session is independent of the state of the second plurality of tags for the second session.

28. The apparatus as in claim 27 wherein the first plurality of tags includes tags from the second plurality of tags.

29. The apparatus as in claim 20 wherein the first plurality of tags are passive backscatter tags.

30. The apparatus as in claim 29 wherein the first state is persistent with intermittent power.

31. The apparatus as in claim 20 wherein each of the first plurality of tags includes an inventory state bit for a first session and a second inventory state bit for a second session.

32. The apparatus as in claim 20 wherein the means for issuing the first set of commands is a handheld reader.

33. The apparatus as in claim 20 wherein the means for issuing the first set of commands is a frequency hopping reader.

34. The apparatus as in claim 20 wherein the means for issuing the first set of commands in a first session is a first reader, and wherein the means for issuing the second set of commands in a second session is a second reader.

35. The apparatus as in claim 34 wherein the first reader and the second reader are assembled into a network.

36. The apparatus as in claim 20 wherein the identifying the first plurality of tags in the first state uses a pseudorandom number pre-acknowledgement.

37. The apparatus as in claim 20 wherein the first plurality of tags are semi-passive backscatter tags.

38. The apparatus as in claim 20 wherein the first plurality of tags are active tags.

39. A tag (18, 19, 20) comprising:
means for receiving at the tag while in a first state, a first set of commands to identify the tag in the first state (1407), wherein, as a result of being identified, the tag in the first state is placed in a second state (1416),
means for receiving at the tag while in the second state (1416), a second set of commands to identify the tag in the second state, wherein, as a result of being identified, the tag in the second state is placed in the first state, wherein at least one of the first set of commands, containing a first parameter associated with the first state, causes the tag in the first state to perform an operation that is identical to the operation performed by the tag in the second state in response to at least one of the second set of commands containing a second parameter associated with the second state, wherein the first state and the second state are not the same and wherein the tag does not respond to the second set of commands while in the first state and does not respond to the first set of commands while in the second state.

## Patentansprüche

1. Verfahren zum Identifizieren von Etiketten, wobei das Verfahren **gekennzeichnet ist durch**:
Ausgeben eines ersten Satzes von Befehlen zum Identifizieren einer ersten Mehrzahl von Etiketten in einem ersten Zustand (1407), wobei infolge des Identifizierens der ersten Mehrzahl von Etiketten im ersten Zustand die im ersten Zustand identifizierte erste Mehrzahl von Etiketten in einen zweiten Zustand (1412) gesetzt wird; und
Ausgeben eines zweiten Satzes von Befehlen zum Identifizieren einer zweiten Mehrzahl von Etiketten im zweiten Zustand (1416), wobei infolge des Identifizierens der zweiten Mehrzahl von Etiketten im zweiten Zustand die im zweiten Zustand identifizierte zweite Mehrzahl von Etiketten in den ersten Zustand (1421) gesetzt wird,
wobei der erste Zustand und der zweite Zustand symmetrische Zustände sind,
und wobei die Etiketten im ersten Zustand nicht auf den zweiten Satz von Befehlen reagieren und die Etiketten im zweiten Zustand nicht auf den ersten Satz von Befehlen reagieren.

2. Verfahren nach Anspruch 1, wobei die Ausgabe des ersten Satzes von Befehlen und die Ausgabe des zweiten Satzes von Befehlen erfolgen, ohne dass eine Abfragevorrichtung zu wissen braucht, dass die Abfragevorrichtung bestimmte Etiketten in den ersten Zustand oder in den zweiten Zustand gesetzt hat.

3. Verfahren nach Anspruch 1, wobei der erste Satz von Befehlen für die erste Mehrzahl von Etiketten im ersten Zustand aus einer Population von Etiketten ist.

4. Verfahren nach Anspruch 3, wobei der zweite Satz von Befehlen für die zweite Mehrzahl von Etiketten im zweiten Zustand aus der Population von Etiketten ist.

5. Verfahren nach Anspruch 4, wobei die zweite Mehrzahl von Etiketten Etiketten aus der ersten Mehrzahl von Etiketten beinhaltet, die vom ersten Zustand in den zweiten Zustand gesetzt wurden.

6. Verfahren nach Anspruch 1, wobei die erste Mehrzahl von Etiketten aus einer Population von Etiketten einer ersten Sitzung zugewiesen wird.

7. Verfahren nach Anspruch 6, das ferner Folgendes beinhaltet:
Ausgeben eines dritten Satzes von Befehlen zum Identifizieren einer dritten Mehrzahl von Etiketten in einem ersten Zustand, wobei infolge des Identifizierens der dritten Mehrzahl von Etiketten der erste Zustand in den zweiten Zustand invertiert wird.

8. Verfahren nach Anspruch 1, wobei die Ausgabe des ersten Satzes von Befehlen für eine erste Sitzung und die Ausgabe des zweiten Satzes von Befehlen für eine zweite Sitzung ist und wobei der Zustand der ersten Mehrzahl von Etiketten für die erste Sitzung vom Zustand der zweiten Mehrzahl von Etiktetten für die zweite Sitzung unabhängig ist.

9. Verfahren nach Anspruch 8, wobei die erste Mehrzahl von Etiketten Etiketten aus der zweiten Mehrzahl von Etiketten beinhaltet.

10. Verfahren nach Anspruch 1, wobei die erste Mehrzahl von Etiketten passive Rückstreuetiketten sind.

11. Verfahren nach Anspruch 10, wobei der erste Zustand mit intermittierender Leistung im Einklang steht.

12. Verfahren nach Anspruch 1, wobei jedes aus der ersten Mehrzahl von Etiketten ein Inventarzustandsbit für eine erste Sitzung und ein zweites Inventarzustandsbit für eine zweite Sitzung beinhaltet.

13. Verfahren nach Anspruch 1, wobei die Ausgabe eines ersten Satzes von Befehlen durch einen Handleser erfolgt.

14. Verfahren nach Anspruch 1, wobei die Ausgabe eines ersten Satzes von Befehlen durch einen Frequenzsprungleser erfolgt.

15. Verfahren nach Anspruch 1, wobei die Ausgabe des ersten Satzes von Befehlen in einer ersten Sitzung durch einen ersten Leser erfolgt und wobei die Ausgabe des zweiten Satzes von Befehlen in einer zweiten Sitzung durch einen zweiten Leser erfolgt.

16. Verfahren nach Anspruch 15, wobei der erste Leser und der zweite Leser zu einem Netzwerk zusammengeschlossen werden.

17. Verwahren nach Anspruch 1, wobei das Identifizieren der ersten Mehrzahl von Etiketten im ersten Zustand eine Pseudozufallszahlen-Vorquittierung benutzt.

18. Verwahren nach Anspruch 1, wobei die erste Mehrzahl von Etiketten halbpassive Rückstreuetiketten ist.

19. Verfahren nach Anspruch 1, wobei die erste Mehrzahl von Etiketten aktive Etiketten ist.

20. Vorrichtung (12) zum Identifizieren von Etiketten, wobei die Vorrichtung **gekennzeichnet ist durch**:
Mittel zum Ausgeben eines ersten Satzes von Befehlen zum Identifizieren einer ersten Mehrzahl von Etiketten in einem ersten Zustand (1407)und zum Setzen der im ersten Zustand identifizierten ersten Mehrzahl von Etiketten in einen zweiten Zustand (1416); und
Mittel zum Ausgeben eines zweiten Satzes von Befehlen zum Identifizieren einer zweiten Mehrzahl von Etiketten im zweiten Zustand (1416) und zum Setzen der im zweiten Zustand identifizierten zweiten Mehrzahl von Etiketten in den ersten Zustand (1421),
wobei wenigstens einer aus dem ersten Satz von Befehlen einen ersten Parameter enthält, der den ersten Zustand anzeigt, wobei wenigstens einer aus dem ersten Satz von Befehlen, der einen den ersten Zustand anzeigenden ersten Parameter enthält, bewirkt, dass die erste Mehrzahl von Etiketten einen Vorgang durchführt, der mit dem von der zweiten Mehrzahl von Etiketten durchgeführten Vorgang identisch ist, als Reaktion auf wenigstens einen aus dem zweiten Satz von Befehlen, der einen zweiten Parameter enthält, der den zweiten Zustand anzeigt,
wobei der erste Zustand und der zweite Zustand nicht dieselben Zustände sind,
und wobei sich der erste Satz von Befehlen vom zweiten Satz von Befehlen dahingehend unterscheidet, dass die Etiketten im ersten Zustand nicht auf den zweiten Satz von Befehlen reagieren und die Etiketten im zweiten Zustand nicht auf den ersten Satz von Befehlen reagieren.

21. Vorrichtung nach Anspruch 20, wobei die Ausgabe des ersten Satzes von Befehlen und die Ausgabe des zweiten Satzes von Befehlen von der Vorrichtung erfolgen, ohne dass die Vorrichtung zu wissen braucht, dass bestimmte Etiketten in den ersten Zustand oder den zweiten Zustand gesetzt werden.

22. Vorrichtung nach Anspruch 20, wobei der erste Satz von Befehlen für die erste Mehrzahl von Etiketten im ersten Zustand aus einer Population von Etiketten erfolgt.

23. Vorrichtung nach Anspruch 22, wobei der zweite Satz von Befehlen für die zweite Mehrzahl von Etiketten im zweiten Zustand aus der Population von Etiketten erfolgt.

24. Vorrichtung nach Anspruch 23, wobei die zweite Mehrzahl von Etiketten Etiketten aus der ersten Mehrzahl von Etiketten beinhaltet, die vom ersten Zustand in den zweiten Zustand gesetzt wurden.

25. Vorrichtung nach Anspruch 20, wobei die erste Mehrzahl von Etiketten aus einer Population von Etiketten einer von der Vorrichtung durchgeführten ersten Sitzung zugeordnet werden.

26. Vorrichtung nach Anspruch 25, die ferner Folgendes umfasst:
Mittel zum Ausgeben eines dritten Satzes von Befehlen zum Identifizieren einer dritten Mehrzahl von Etiketten in einem ersten Zustand, wobei infolge des Identifizierens der dritten Mehrzahl von Etiketten der erste Zustand in den zweiten Zustand invertiert wird.

27. Vorrichtung nach Anspruch 20, wobei die Ausgabe des ersten Satzes von Befehlen für eine erste Sitzung ist und die Ausgabe des zweiten Satzes von Befehlen für eine zweite Sitzung ist und wobei der Zustand der ersten Mehrzahl von Etiketten für die erste Sitzung vom Zustand der zweiten Mehrzahl von Etiketten für die zweite Sitzung unabhängig ist.

28. Vorrichtung nach Anspruch 27, wobei die erste Mehrzahl von Etiketten Etiketten aus der zweiten Mehrzahl von Etiketten beinhaltet.

29. Vorrichtung nach Anspruch 20, wobei die erste Mehrzahl von Etiketten passive Rückstreuetiketten ist.

30. Vorrichtung nach Anspruch 29, wobei der erste Zustand mit intermittierender Leistung im Einklang steht.

31. Vorrichtung nach Anspruch 20, wobei jedes aus der ersten Mehrzahl von Etiketten ein Inventarzustandsbit für eine erste Sitzung und ein zweites Inventarzustandsbit für eine zweite Sitzung beinhaltet.

32. Vorrichtung nach Anspruch 20, wobei das Mittel zum Ausgeben des ersten Satzes von Befehlen ein Handleser ist.

33. Vorrichtung nach Anspruch 20, wobei das Mittel zum Ausgeben des ersten Satzes von Befehlen ein Frequenzsprungleser ist.

34. Vorrichtung nach Anspruch 20, wobei das Mittel zum Ausgeben des ersten Satzes von Befehlen in einer ersten Sitzung ein erster Leser ist und wobei das Mittel zum Ausgeben des zweiten Satzes von Befehlen in einer zweiten Sitzung ein zweiter Leser ist.

35. Vorrichtung nach Anspruch 34, wobei der erste Leser und der zweite Leser zu einem Netzwerk zusammengeschlossen sind.

36. Vorrichtung nach Anspruch 20, wobei das Identifizieren der ersten Mehrzahl von Etiketten im ersten Zustand eine Pseudozufallszahlen-Vorquittierung benutzt.

37. Vorrichtung nach Anspruch 20, wobei die erste Mehrzahl von Etiketten halbpassive Rückstreuetiketten ist.

38. Vorrichtung nach Anspruch 20, wobei die erste Mehrzahl von Etiketten aktive Etiketten ist.

39. Etikett (18, 19, 20), das Folgendes umfasst:
Mittel zum Empfangen an dem Etikett, während es in einem ersten Zustand ist, eines ersten Satzes von Befehlen zum Identifizieren des Etiketts im ersten Zustand (1407), wobei das Etikett infolge der Identifikation im ersten Zustand in einen zweiten Zustand (1416) gesetzt wird,
Mittel zum Empfangen an dem Etikett, wenn es im zweiten Zustand (1416) ist, eines zweiten Satzes von Befehlen zum Identifizieren des Etiketts im zweiten Zustand, wobei das Etikett infolge der Identifikation im zweiten Zustand in den ersten Zustand gesetzt wird, wobei wenigstens einer aus dem ersten Satz von Befehlen, der einen mit dem ersten Zustand assoziierten ersten Parameter enthält, bewirkt, dass das Etikett im ersten Zustand einen Vorgang durchführt, der mit dem vom Etikett im zweiten Zustand durchgeführten Vorgang identisch ist, als Reaktion auf wenigstens einen aus dem zweiten Satz von Befehlen, der einen mit dem zweiten Zustand assoziierten zweiten Parameter enthält, wobei der erste Zustand und der zweite Zustand nicht derselbe sind und wobei das Etikett nicht auf den zweiten Satz von Befehlen reagiert, wenn es im ersten Zustand ist, und nicht auf den ersten Satz von Befehlen reagiert, wenn es im zweiten Zustand ist.

## Revendications

1. Un procédé d'identification de balises, le procédé étant **caractérisé par** :
l'émission d'un premier ensemble de commandes destinées à identifier une première pluralité de balises dans un premier état (1407), où, suite à l'identification de la première pluralité de balises dans le premier état, la première pluralité de balises qui sont identifiées dans le premier état sont placées dans un deuxième état (1412), et
l'émission d'un deuxième ensemble de commandes destinées à identifier une deuxième pluralité de balises dans le deuxième état (1416), où, suite à l'identification de la deuxième pluralité de balises dans le deuxième état, la deuxième pluralité de balises qui sont identifiées dans le deuxième état sont placées dans le premier état (1421),
où le premier état et le deuxième état sont des états symétriques, et
où les balises dans le premier état ne répondent pas au deuxième ensemble de commandes et les balises dans le deuxième état ne répondent pas au premier ensemble de commandes.

2. Le procédé selon la Revendication 1 où l'émission du premier ensemble de commandes et l'émission du deuxième ensemble de commandes sont exécutées sans exiger qu'un interrogateur sache que l'interrogateur a placé certaines balises dans le premier état ou dans le deuxième état.

3. Le procédé selon la Revendication 1 où le premier ensemble de commandes est destiné à la première pluralité de balises dans le premier état à partir d'une population de balises.

4. Le procédé selon la Revendication 3 où le deuxième ensemble de commandes est destiné à la deuxième pluralité de balises dans le deuxième état à partir de la population de balises.

5. Le procédé selon la Revendication 4 où la deuxième pluralité de balises comprend des balises provenant de la première pluralité de balises qui ont été placées du premier état vers le deuxième état.

6. Le procédé selon la Revendication 1 où la première pluralité de balises d'une population de balises sont attribuées à une première session.

7. Le procédé selon la Revendication 6 comprenant en outre :
l'émission d'un troisième ensemble de commandes destinées à identifier une troisième pluralité de balises dans un premier état, où, suite à l'identification de la troisième pluralité de balises, le premier état est basculé vers le deuxième état.

8. Le procédé selon la Revendication 1 où l'émission du premier ensemble de commandes est destiné à une première session et l'émission du deuxième ensemble de commandes est destiné à une deuxième session, et où l'état de la première pluralité de balises pour la première session est indépendant de l'état de la deuxième pluralité de balises pour la deuxième session.

9. Le procédé selon la Revendication 8 où la première pluralité de balises comprend des balises provenant de la deuxième pluralité de balises.

10. Le procédé selon la Revendication 1 où la première pluralité de balises sont des balises de rétrodiffusion passives.

11. Le procédé selon la Revendication 10 où le premier état est persistant avec une alimentation intermittente.

12. Le procédé selon la Revendication 1 où chaque balise de la première pluralité de balises comprend un bit d'état d'inventaire pour une première session et un deuxième bit d'état d'inventaire pour une deuxième session.

13. Le procédé selon la Revendication 1 où l'émission d'un premier ensemble de commandes est réalisée par un lecteur portatif.

14. Le procédé selon la Revendication 1 où l'émission d'un premier ensemble de commandes est réalisée par un lecteur à sauts de fréquence.

15. Le procédé selon la Revendication 1 où l'émission du premier ensemble de commandes dans une première session est réalisée par un premier lecteur, et où l'émission du deuxième ensemble de commandes dans une deuxième session est réalisée par un deuxième lecteur.

16. Le procédé selon la Revendication 15 où le premier lecteur et le deuxième lecteur sont assemblés en un réseau.

17. Le procédé selon la Revendication 1 où l'identification de la première pluralité de balises dans le premier état utilise un pré-accusé de réception à nombre pseudo-aléatoire.

18. Le procédé selon la Revendication 1 où la première pluralité de balises sont des balises de rétrodiffusion semi-passives.

19. Le procédé selon la Revendication 1 où la première pluralité de balises sont balises actives.

20. Un appareil (12) d'identification de balises, l'appareil étant **caractérisé par** :
un moyen d'émission d'un premier ensemble de commandes destinées à identifier une première pluralité de balises dans un premier état (1407) et à placer la première pluralité de balises, qui sont identifiées dans le premier état, dans un deuxième état (1416), et
un moyen d'émission d'un deuxième ensemble de commandes destinées à identifier une deuxième pluralité de balises dans le deuxième état (1416) et à placer la deuxième pluralité de balises, qui sont identifiées dans le deuxième état, dans le premier état (1421),
où au moins une commande du premier ensemble de commandes contient un premier paramètre indiquant le premier état, où au moins une commande du premier ensemble de commandes contenant un premier paramètre indiquant le premier état amène la première pluralité de balises à exécuter une opération qui est identique à l'opération exécutée par la deuxième pluralité de balises en réponse à au moins une commande du deuxième ensemble de commandes qui contient un deuxième paramètre indiquant le deuxième état,
où le premier état et le deuxième état ne sont pas les mêmes états,
et où le premier ensemble de commandes est différent du deuxième ensemble de commandes en ce que les balises dans le premier état ne répondent pas au deuxième ensemble de commandes et les balises dans le deuxième état ne répondent pas au premier ensemble de commandes.

21. L'appareil selon la Revendication 20 où l'émission du premier ensemble de commandes et l'émission du deuxième ensemble de commandes sont exécutées par l'appareil sans exiger que l'appareil sache que certaines balises sont placées dans le premier état ou dans le deuxième état.

22. L'appareil selon la Revendication 20 où le premier ensemble de commandes est destiné à la première pluralité de balises dans le premier état à partir d'une population de balises.

23. L'appareil selon la Revendication 22 où le deuxième ensemble de commandes est destiné à la deuxième pluralité de balises dans le deuxième état à partir de la population de balises.

24. L'appareil selon la Revendication 23 où la deuxième pluralité de balises comprend des balises provenant de la première pluralité de balises qui ont été placées du premier état vers le deuxième état.

25. L'appareil selon la Revendication 20 où la première pluralité de balises d'une population de balises sont attribuées à une première session exécutée par l'appareil.

26. L'appareil selon la Revendication 25 comprenant en outre :
un moyen d'émission d'un troisième ensemble de commandes destinée à identifier une troisième pluralité de balises dans un premier état, où, suite à l'identification de la troisième pluralité de balises, le premier état est basculé vers le deuxième état.

27. L'appareil selon la Revendication 20 où l'émission du premier ensemble de commandes est destinée à une première session et l'émission du deuxième ensemble de commandes est destinée à une deuxième session, et où l'état de la première pluralité de balises pour la première session est indépendant de l'état de la deuxième pluralité de balises pour la deuxième session.

28. L'appareil selon la Revendication 27 où la première pluralité de balises comprend des balises provenant de la deuxième pluralité de balises.

29. L'appareil selon la Revendication 20 où la première pluralité de balises sont des balises de rétrodiffusion passives.

30. L'appareil selon la Revendication 29 où le premier état est persistant avec une alimentation intermittente.

31. L'appareil selon la Revendication 20 où chaque balise de la première pluralité de balises comprend un bit d'état d'inventaire pour une première session et un deuxième bit d'état d'inventaire pour une deuxième session.

32. L'appareil selon la Revendication 20 où le moyen d'émission du premier ensemble de commandes est un lecteur portatif.

33. L'appareil selon la Revendication 20 où le moyen d'émission du premier ensemble de commandes est un lecteur à sauts de fréquence.

34. L'appareil selon la Revendication 20 où le moyen d'émission du premier ensemble de commandes dans une première session est un premier lecteur, et où le moyen d'émission du deuxième ensemble de commandes dans une deuxième session est un deuxième lecteur.

35. L'appareil selon la Revendication 34 où le premier lecteur et le deuxième lecteur sont assemblés en un réseau.

36. L'appareil selon la Revendication 20 où l'identification de la première pluralité de balises dans le premier état utilise un pré-accusé de réception à nombre pseudo-aléatoire.

37. L'appareil selon la Revendication 20 où la première pluralité de balises sont des balises de rétrodiffusion semi-passives.

38. L'appareil selon la Revendication 20 où la première pluralité de balises sont des balises actives.

39. Une balise (18, 19, 20) comprenant:
un moyen de réception, au niveau de la balise pendant qu'elle est dans un premier état, d'un premier ensemble de commandes destinées à identifier la balise dans le premier état (1407), où, suite à son identification, la balise dans le premier état est placée dans un deuxième état (1416),
un moyen de réception, au niveau de la balise pendant qu'elle est dans le deuxième état (1416), d'un deuxième ensemble de commandes destinées à identifier la balise dans le deuxième état, où, suite à son identification, la balise dans le deuxième état est placée dans le premier état, où au moins une commande du premier ensemble de commandes, contenant un premier paramètre associé au premier état, amène la balise dans le premier état à exécuter une opération qui est identique à l'opération exécutée par la balise dans le deuxième état en réponse à au moins une commande du deuxième ensemble de commandes contenant un deuxième paramètre associé au deuxième état, où le premier état et le deuxième état ne sont pas les mêmes et où la balise ne répond pas au deuxième ensemble de commandes lorsqu'elle se trouve dans le premier état et ne répond pas au premier ensemble de commandes lorsqu'elle se trouve dans le deuxième état.
